(19) Europäisches Patentamt
European Patent Office
Office européen des brevets

(11) **EP 2 081 391 B1**

(12) **EUROPEAN PATENT SPECIFICATION**

(45) Date of publication and mention
of the grant of the patent:
**19.03.2014   Bulletin 2014/12**

(51) Int Cl.:
*H04N 17/00* *(2006.01)*    *H04N 5/225* *(2006.01)*

(21) Application number: **09000526.5**

(22) Date of filing: **15.01.2009**

(54) **Method for adjusting position of image sensor, method and apparatus for manufacturing a camera module, and camera module**

Verfahren zur Einstellung der Position eines Bildsensors, Verfahren und Vorrichtung zur Herstellung eines Kameramoduls und Kameramodul

Procédé pour le réglage de la position d'un capteur d'image, procédé et appareil pour la fabrication d'un module de caméra et module de caméra

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **15.01.2008   JP 2008005573**
**12.06.2008   JP 2008154224**
**08.01.2009   JP 2009002764**

(43) Date of publication of application:
**22.07.2009   Bulletin 2009/30**

(73) Proprietor: **FUJIFILM Corporation**
**Minato-ku**
**Tokyo 106-8620 (JP)**

(72) Inventors:
• **Kikuchi, Shinichi**
**Minamiashigara-shi**
**Kanagawa (JP)**
• **Nojima, Yoshio**
**Minamiashigara-shi**
**Kanagawa (JP)**

(74) Representative: **Grünecker, Kinkeldey,**
**Stockmair & Schwanhäusser**
**Leopoldstrasse 4**
**80802 München (DE)**

(56) References cited:
EP-A1- 1 696 254      WO-A1-2006/080184
GB-A- 2 420 239      JP-A- 2003 043 328
US-A1- 2007 077 052      US-A1- 2007 188 893
US-A1- 2008 246 866

**Description**

FIELD OF THE INVENTION

The present invention relates to a method for adjusting position of an image sensor with respect to a taking lens, and a method and apparatus for manufacturing a camera module having a lens unit and a sensor unit.

BACKGROUND OF THE INVENTION

A camera module that includes a lens unit having a taking lens and a sensor unit having an image sensor such as CCD or CMOS is well known. The camera modules are incorporated in small electronic devices, such as cellular phones, and provide an image capture function.

Conventionally, the camera modules are provided with an image sensor having as few pixels as one or two million. Since the low-pixel-number image sensors have a high aperture ratio, an image can be captured at appropriate resolution to the number of pixels without adjusting positions of the taking lens and the image sensor precisely. Recent camera modules, however, become to have an image sensor having as many pixels as three to five million, as is the case with the general digital cameras. Since the high-pixel-number image sensors have a low aperture ratio, the positions of the taking lens and the image sensor need be adjusted precisely to capture an image at appropriate resolution to the number of pixels.

There is disclosed camera module manufacturing method and apparatus which automatically adjust the position of the lens unit to the sensor unit and automatically fix the lens unit and the sensor unit (see, for example, Japanese Patent Laid-open Publication No. JP-A-2005-198103) . In this camera module manufacturing method, the lens unit and the sensor unit are fixed after rough focus adjustment, tilt adjustment and fine focus adjustment.

In the rough focus adjustment process, the lens unit and the sensor unit are placed in initial positions firstly, and as the lens unit is moved along a direction of its optical axis, a measurement chart is captured with an image sensor. Then, searched from the captured images is a position to provide the highest resolution at five measurement points previously established on an imaging surface of the image sensor. Lastly, the lens unit is placed in the searched position. In the tilt adjustment process, the tilt of the lens unit is adjusted by feedback control so that the resolution at each measurement point falls within a predetermined range and becomes substantially uniform. In the fine focus adjustment process, a lens barrel is moved in the lens unit along the optical axis direction to search for a position to provide the highest resolution.

There is also disclosed an adjusting method which, although it is intended basically for a stationary lens group composing a zoom lens, firstly determines a desired adjustment value, and then adjusts the tilt of the stationary lens group toward the desired adjustment value (see, for example, Japanese Patent Laid-open Publication No. JP-A-2003-043328). This adjusting method repeats the process of measuring a defocus coordinate value, calculating an adjustment value, and adjusting the tilt of the stationary lens group for certain times or until the adjustment value falls within a predetermined range.

In the process for measuring the defocus coordinate value disclosed in the Publication No. JP-A-2003-043328, the zoom lens is placed in a telephoto side, and images of an object are captured with an image sensor while changing focus from near to infinity, so as to obtain a defocus curve to peak an MTF (Modulate Transfer Function) value for each of four measurement points in first to fourth quadrants on the imaging surface of the image sensor. In the process for calculating the adjustment value, three dimensional coordinate value of the peak point is obtained for each of the four MTF defocus curves. Then, four kinds of planes each defined by the three points out of the three dimensional coordinate values are calculated, and a normal vector of each plane is calculated. Additionally, the normal vectors of these four planes are averaged to obtain a unit normal vector. This unit normal vector is then used for obtain a target plane to which the tilt of the stationary lens group is adjusted, and amount of adjustment to the target plane is calculated. In the process for adjusting the tilt of the stationary lens group, an adjusting screw or an adjusting ring of an adjustment mechanism provided in the zoom lens is manually rotated.

However, the method and apparatus of the Publication No. JP-A-2005-198103 require a long time because the rough focus adjustment, the tilt adjustment and the fine focus adjustment have to be performed sequentially. Also, the tilt adjustment takes a long time because the position to provide the highest resolution is searched by the feedback control before the tilt of the lens unit is adjusted.

The method and apparatus of the Publication No. JP-A-2003-043328 also require a long time because the processes for measuring the defocus coordinate, calculating the adjustment value, and adjusting the tilt of the stationary lens group are repeated. Additionally, since the tilt of the stationary lens group is adjusted manually, the time and precision in the adjustment are affected by the skill of an engineer. Although the Publication No. JP-A-2003-043328 is silent about a focus adjustment process, additional time may be required in the event that the focus adjustment process is added.

In manufacture of mass-production camera modules to be incorporated in cellular phones or such devices, a number of camera modules with the same quality have to be manufactured in a short time. Therefore, the methods and the apparatus of the above publications can hardly be applied to the manufacture of mass-production camera modules.

SUMMARY OF THE INVENTION

In view of the foregoing, an object of the present invention is to provide a method for adjusting position of an image sensor with respect to a taking lens in a short time, and a method and apparatus for manufacturing a camera module using the same.

In order to achieve the above and other objects, a method for adjusting position of an image sensor according to the present invention includes an in-focus coordinate value obtaining step, an imaging plane calculating step, an adjustment value calculating step and an adjusting step. In the in-focus coordinate value obtaining step, a taking lens and an image sensor for capturing a chart image formed through the taking lens are firstly placed on a Z axis that is orthogonal to a measurement chart, and the chart image is captured during one of the taking lens and the image sensor is sequentially moved to a plurality of discrete measurement positions previously established on the Z axis. Then, a focus evaluation value representing a degree of focus in each imaging position is calculated for each of the measurement positions based on image signals obtained in at least five imaging positions established on an imaging surface of the image sensor. Lastly, one of the measurement positions providing a predetermined focus evaluation value is obtained as an in-focus coordinate value for each of the imaging positions.

In the imaging plane calculating step, at least five evaluation points, indicated by a combination of XY coordinate values of the imaging positions on the imaging surface aligned to an XY coordinate plane orthogonal to the Z axis and the in-focus coordinate values on the Z axis for each imaging position, are transformed in a three dimensional coordinate system defined by the XY coordinate plane and the Z axis. Then, an approximate imaging plane expressed as a single plane in the three dimensional coordinate system based on the relative position of these evaluation points is calculated. In the adjustment value calculating step, an imaging plane coordinate value representing an intersection of the Z axis with the approximate imaging plane is calculated, and also rotation angles of the approximate imaging plane in X axis and Y axis with respect to the XY coordinate plane are calculated. In the adjusting step, based on the imaging plane coordinate value and the rotation angles, the position on the Z axis and tilt in the X and Y axes of the image sensor are adjusted so as to overlap the imaging surface with the approximate imaging plane.

In a preferred embodiment of the present invention, the measurement position on the Z axis providing the highest focus evaluation value is obtained as the in-focus coordinate value in the in-focus coordinate value obtaining step. It is possible in this case to adjust the position of the image sensor based on the position on the Z axis having the highest focus evaluation value.

In another preferred embodiment of the present invention, the in-focus coordinate value obtaining step includes a step of comparing the focus evaluation values of adjacent measurement positions on the Z axis sequentially for each of said imaging positions, and a step of stopping movement of the taking lens or the image sensor to the next measurement position when the evaluation value declines predetermined consecutive times. In this case, the in-focus coordinate value is the coordinate value of the measurement position before the evaluation value declines. Since the focus evaluation values are not necessarily obtained for all the measurement positions, the time for the in-focus coordinate value obtaining step can be reduced.

In yet another preferred embodiment of the present invention, the in-focus coordinate value obtaining step includes a step of generating an approximate curve from a plurality of evaluation points expressed by a combination of coordinate values of the measurement positions on the Z axis and the focus evaluation values at each measurement position, and a step of obtaining the position on the Z axis to correspond to the highest focus evaluation value obtained from the approximate curve as the in-focus coordinate value. Since there is no need to measure the highest focus evaluation value of the imaging positions, the time for the step can be more reduced than the case to measure the highest focus evaluation value. Nonetheless, the in-focus evaluation value is obtained based on the highest focus evaluation value, and adjustment precision can be improved.

In still another preferred embodiment of the present invention, the in-focus coordinate value obtaining step includes a step of calculating a difference of each focus evaluation value calculated at each of measurement positions from a predetermined designated value for each of the imaging positions, and a step of obtaining the position of the measurement position showing the smallest said difference on the Z axis. Since the in-focus evaluation values of the imaging positions are well balanced, image quality can be improved.

It is preferred to use contrast transfer function values as the focus evaluation values. In this case, the in-focus coordinate value obtaining step may further includes a step of calculating the contrast transfer function values in a first direction and a second direction orthogonal to the first direction on the XY coordinate plane for each of the measurement positions in each imaging position, and a step of obtaining first and second in-focus coordinate values in the first and second directions for each imaging position. Also in this case, the imaging plane calculating step may further includes a step of obtaining at least ten evaluation points from the first and second in-focus coordinate values for each imaging position, and a step of calculating the approximate imaging plane based on the relative position of these evaluation points. These steps allow having a well-balanced approximate imaging plane even when the contrast transfer function values for each imaging position vary with directions. Additionally, the calculation accuracy of the approximate imaging plane is improved by an increased number of the evaluation points.

Preferably, the first direction and the said second direction for calculation of the contrast transfer function values are a horizontal direction and a vertical direction. Alternatively, the contrast transfer function values may be calculated in a radial direction of the taking lens and an orthogonal direction to this radial direction.

The five imaging position on the imaging surface are preferably in the center of the imaging surface and in each of quadrants of the imaging surface. Additionally, the chart patterns on the imaging positions are preferably identical in the in-focus coordinate value obtaining step.

It is preferred to perform a checking step for repeating the in-focus coordinate obtaining step once again after the adjusting step so as to check the in-focus coordinate value of each imaging position. Additionally, it is preferred to repeat the in-focus coordinate value obtaining step, the imaging plane calculating step, the adjustment value calculating step and the adjusting step several times so as to overlap the imaging surface with the approximate imaging plane.

A method for manufacturing a camera module according to the present invention uses the method for adjusting position of the image sensor as defined in claim 1 so as to position a sensor unit having an image sensor with respect to a lens unit having a taking lens.

An apparatus for manufacturing a camera module according to the present invention includes a measurement chart, a lens unit holder, a sensor unit holder, a measurement position changer, a sensor controller, an in-focus coordinate obtaining device, an imaging plane calculating device, an adjustment value calculating device and an adjuster. The measurement chart is provided with a chart pattern. The lens unit holder holds a lens unit having a taking lens and places the lens unit on a Z axis orthogonal to the measurement chart. The sensor unit holder holds and places a sensor unit having an image sensor on the Z axis, and changes the position of the sensor unit on the Z axis and the tilt of the sensor unit in X and Y axes orthogonal to the Z axis. The measurement position changer moves the lens unit holder or the said sensor unit holder so that the taking lens or the image sensor is moved sequentially to a plurality of discrete measurement positions previously established on the Z axis. The sensor controller directs the image sensor to capture a chart image formed through the taking lens on each of the measurement positions.

The in-focus coordinate obtaining device calculates focus evaluation values representing a degree of focus on each measurement positions in each imaging position based on imaging signals obtained in at least five imaging positions established on an imaging surface of the image sensor. The in-focus coordinate obtaining device the obtains the position of the measurement position providing a predetermined focus evaluation value as an in-focus coordinate value for each imaging position. The imaging plane calculating device firstly transforms at least five evaluation points, indicated by a combination of XY coordinate values of the imaging positions on the imaging surface aligned to an XY coordinate plane orthogonal to the Z axis and the in-focus coordinate values on the Z axis for each imaging position, on a three dimensional coordinate system defined by the XY coordinate plane and the Z axis. Then, the imaging plane calculating device calculates an approximate imaging plane defined as a single plane in the three dimensional coordinate system by the relative positions of said evaluation points.

The adjustment value calculating device calculates an imaging plane coordinate value representing an intersection of the Z axis with the approximate imaging plane, and also calculates rotation angles of the approximate imaging plane around an X axis and a Y axis with respect to the XY coordinate plane. The adjuster drives the sensor unit holder based on the approximate imaging plane and the rotation angles in around the X and Y axes, and adjusts the position on the Z axis and the tilt around the X and Y axes of the image sensor until the imaging surface overlaps with the approximate imaging plane.

It is preferred to provide a fixing device for fixing the lens unit and the sensor unit after adjustment of the position on the Z axis and the tilt around the X and Y axes of the sensor unit.

Preferably, the sensor unit holder includes a holding mechanism for holding the sensor unit, a biaxial rotation stage for tilting the holding mechanism around the X axis and the Y axis, and a slide stage for moving the biaxial rotation stage along the Z axis.

It is preferred to further provide the sensor unit holder with a sensor connecter for electrically connecting the image sensor and the sensor controller. It is also preferred to provide the lens unit holder with an AF connecter for electrically connecting an auto-focus mechanism incorporated in the lens unit and an AF driver for driving the auto-focus mechanism.

The measurement chart is preferably divided into eight segments along the X axis direction, the Y axis direction and two diagonal directions from the center of a rectangular chart surface, and two segments of each quadrant may have mutually orthogonal parallel lines. This chart image can be used for adjustment of image sensors with different field angles, and eliminates the need to exchange the chart images for different types of image sensors.

According to the present invention, all the steps from obtaining the in-focus coordinate value of each imaging position on an imaging surface of the image sensor, calculating the approximate imaging plane based on the in-focus coordinate values, and calculating the adjustment value used for overlapping the imaging surface with the approximate imaging plane are automated. Additionally, the focus adjustment and the tilt adjustment are completed simultaneously. It is therefore possible to adjust the position of the image sensor in a short time. The present invention especially has a significant effect on manufacture of the mass-production camera modules, and enables manufacturing a number of camera modules beyond a certain quality in a short time.

## BRIEF DESCRIPTION OF THE DRAWINGS

The above objects and advantages of the present invention will become more apparent from the following detailed description when read in connection with the accompanying drawings, in which:

FIG. 1 is a front perspective view of a camera module;
FIG. 2 is a rear perspective view of the camera module;
FIG. 3 is a perspective view of a lens unit and a sensor unit;
FIG. 4 is a cross-sectional view of the camera module;
FIG. 5 is a schematic view illustrating a camera module manufacturing apparatus;
FIG. 6 is a front view of a chart surface of a measurement chart;
FIG. 7 is an explanatory view illustrating the lens unit and the sensor unit being held;
FIG. 8 is a block diagram illustrating an electrical configuration of the camera module manufacturing apparatus;
FIG. 9 is an explanatory view illustrating imaging positions established on an imaging surface;
FIG. 10 is a flowchart for manufacturing the camera module;
FIG. 11 is a flowchart of an in-focus coordinate value obtaining step according to a first embodiment;
FIG. 12 is a graph of H-CTF values at each measurement point before adjustment of the sensor unit;
FIG. 13 is a graph of V-CTF values at each measurement point before adjustment of the sensor unit;
FIG. 14 is a three dimensional graph, viewed from an X axis, illustrating evaluation points of each imaging position before adjustment of the sensor unit;
FIG. 15 is a three dimensional graph, viewed from a Y axis, illustrating evaluation points of each imaging position before adjustment of the sensor unit;
FIG. 16 is a three dimensional graph, viewed from an X axis, illustrating an approximate imaging plane obtained from in-focus coordinate values of each imaging position;
FIG. 17 is a three dimensional graph of the evaluation points, viewed from a surface of the approximate imaging plane;
FIG. 18 is a graph of the H-CTF values at each measurement point after adjustment of the sensor unit;
FIG. 19 is a graph of the V-CTF values at each measurement point after adjustment of the sensor unit;
FIG. 20 is a three dimensional graph, viewed from the X axis, illustrating the evaluation points of each imaging position after adjustment of the sensor unit;
FIG. 21 is a three dimensional graph, viewed from the Y axis, illustrating the evaluation points of each imaging position after adjustment of the sensor unit;
FIG. 22 is a block diagram of an in-focus coordinate value obtaining circuit according to a second embodiment;
FIG. 23 is a flowchart of an in-focus coordinate value obtaining step according to the second embodiment;
FIG. 24 is a graph illustrating an example of horizontal in-focus coordinate values obtained in the second embodiment;

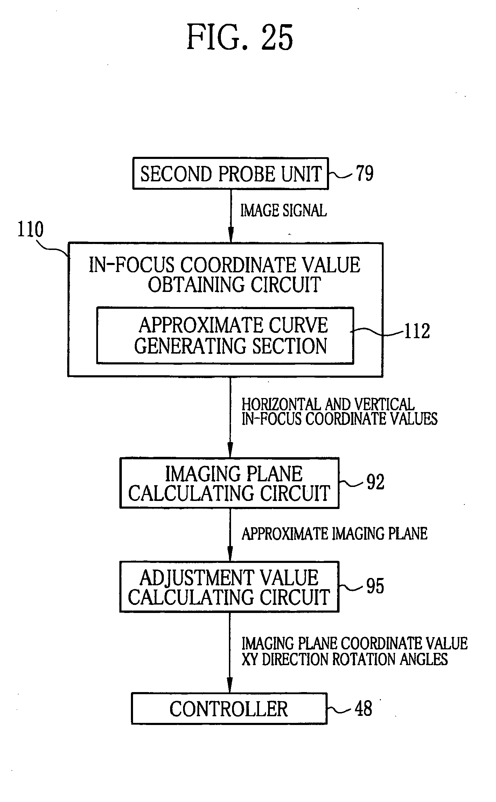

FIG. 25 is a block diagram of an in-focus coordinate value obtaining circuit according to a third embodiment;
FIG. 26 is a flowchart of an in-focus coordinate value obtaining step according to the third embodiment;
FIG. 27A and FIG. 27B are graphs illustrating an example of horizontal in-focus coordinate values obtained in the third embodiment;
FIG. 28 is a block diagram of an in-focus coordinate value obtaining circuit according to a fourth embodiment;
FIG. 29 is a flowchart of an in-focus coordinate value obtaining step according to the fourth embodiment;
FIG. 30 is a graph illustrating an example of horizontal in-focus coordinate values obtained in the fourth embodiment;
FIG. 31 is a front view of a measurement chart used for calculation of CTF values in a radial direction of a taking lens and an orthogonal direction to the radial direction; and
FIG. 32 is a front view of a measurement chart used for adjusting position of image sensors with different field angles.

## DETAILED DESCRIPTION OF THE PREFERRED EMBODIMENTS

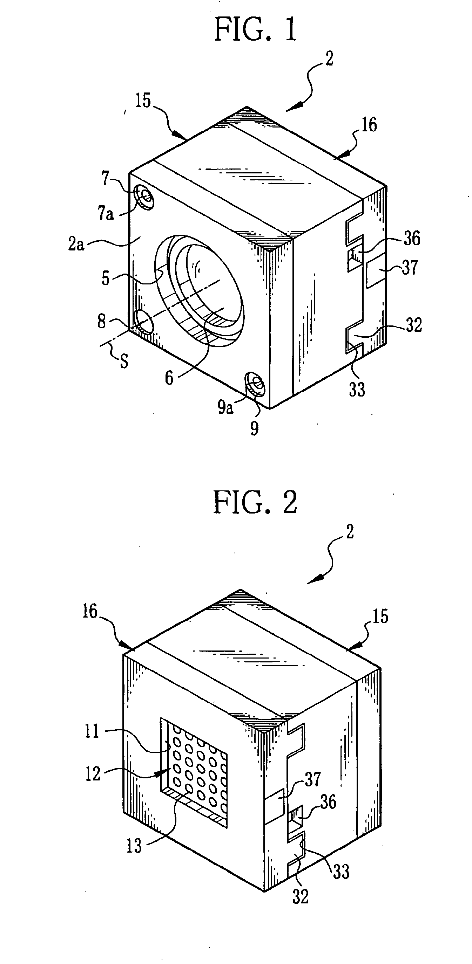

Referring to FIG. 1 and FIG. 2, a camera module 2 has a cubic shape with a substantially 10 mm side, for example. A photographing opening 5 is formed in the middle of a front surface 2a of the camera module 2. Behind the photographing opening 5, a taking lens 6 is placed. Disposed on four corners around the photographing opening 5 are three positioning surfaces 7-9 for positioning the camera module 2 during manufacture. The two positioning surfaces 7, 9 on the same diagonal line are provided at the center thereof with positioning hole 7a, 9a having a smaller diameter than the positioning surface. These positioning elements regulate an absolute position and tilt in space with high precision.

On a rear surface of the camera module 2, a rectangular opening 11 is formed. The opening 11 exposes a plurality of electric contacts 13 which are provided on a rear surface of an image sensor 12 incorporated in the camera module 2.

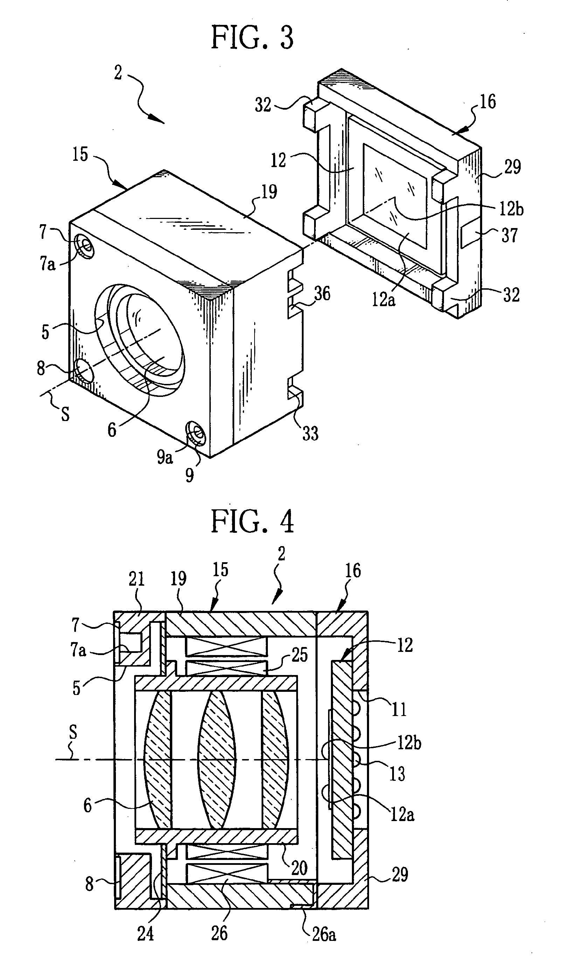

As shown in FIG. 3, the camera module 2 includes a lens unit 15 having the taking lens 6 and a sensor unit 16 having the image sensor 12. The sensor unit 16 is attached on the rear side of the lens unit 15.

As shown in FIG. 4, the lens unit 15 includes a hollowed unit body 19, a lens barrel 20 incorporated in the unit body 19, and a front cover 21 attached to a front surface of the unit body 19. The front cover 21 is provided with the aforesaid photographing opening 5 and the positioning surfaces 7-9. The unit body 19, the lens barrel 20 and the front cover 21 are made of, for example, plastic.

The lens barrel 20 is formed into a cylindrical shape, and holds the taking lens 6 made up of, for example, three lens groups. The lens barrel 20 is supported by a metal leaf spring 24 that are attached to the front surface of the unit body 19, and moved in the direction of an optical axis S by an elastic force of the leaf spring 24.

Attached to an exterior surface of the lens barrel 20 and an interior surface of the unit body 19 are a permanent magnet 25 and an electromagnet 26, which are arranged face-to-face to provide an autofocus mechanism. The electromagnet 26 changes polarity as the flow of an applied electric current is reversed. In response to the polarity change of the electromagnet 26, the permanent magnet 25 is attracted or repelled to move the lens barrel 20 along the S direction, and the focus is adjusted. An electric contact 26a for conducting the electric current to the electromagnet 26 appears on, for example, a bottom surface of the unit body 19. It is to be noted that the autofocus mechanism is not limited but may include a combination of a pulse motor and a feed screw or a feed mechanism using a piezo transducer.

The sensor unit 16 is composed of a frame 29 of rectangular shape, and the image sensor 12 fitted into the frame 29 in the posture to orient an imaging surface 12a toward the lens unit 15. The frame 29 is made of plastic or the like.

The frame 29 has four projections 32 on lateral ends of the front surface. These projections 32 are fitted in depressions 33 that partially remove the corners between a rear surface and side surfaces of the unit body 19. When fitting onto the projections 32, the depressions are filled with adhesive to unite the lens unit 15 and the sensor unit 16.

On the two corners between the rear surface and the side surfaces of the unit body 19, a pair of cutouts 36 is formed at different heights. By way of contrast, the frame 29 has a pair of flat portions 37 on the side surfaces. The cutouts 36 and the flat portions 37 are used to position and hold the lens unit 15 and the sensor unit 16 during assembly. The cutouts 36 and the flat portions 37 are provided because the unit body 19 and the frame 29 are fabricated by injection molding, and their side surfaces are tapered for easy demolding. Therefore, if the unit body 19 and the frame 29 have no tapered surface, the cutouts 36 and the flat portions 37 may be omitted.

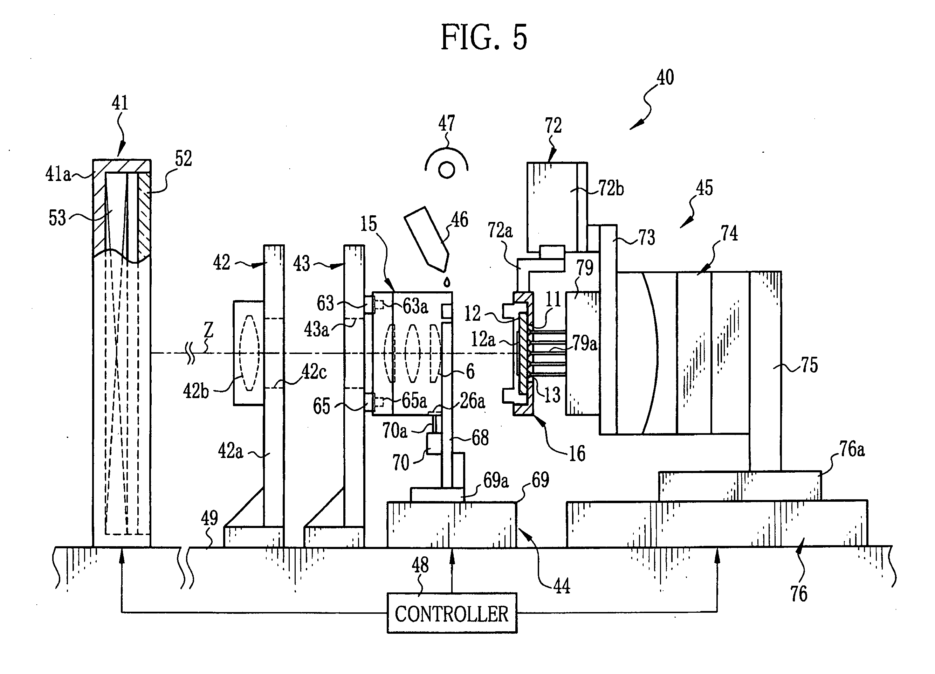

Next, a first embodiment of the present invention is described. As shown in FIG. 5, a camera module manufacturing apparatus 40 is configured to adjust the position of the sensor unit 16 to the lens unit 15, and then fixe the sensor unit 16 to the lens unit 15. The camera module manufacturing apparatus 40 includes a chart unit 41, a light collecting unit 42, a lens positioning plate 43, a lens holding mechanism 44, a sensor shift mechanism 45, an adhesive supplier 46, an ultraviolet lamp 47 and a controller 48 controlling these components. All the components are disposed on a common platform 49.

The chart unit 41 is composed of an open-fronted boxy casing 41a, a measurement chart 52 fitted in the casing 41a, and a light source 53 incorporated in the casing 41a to illuminate the measurement chart 52 with parallel light beams from the back side. The measurement chart 52 is composed of, for example, a light diffusing plastic plate.

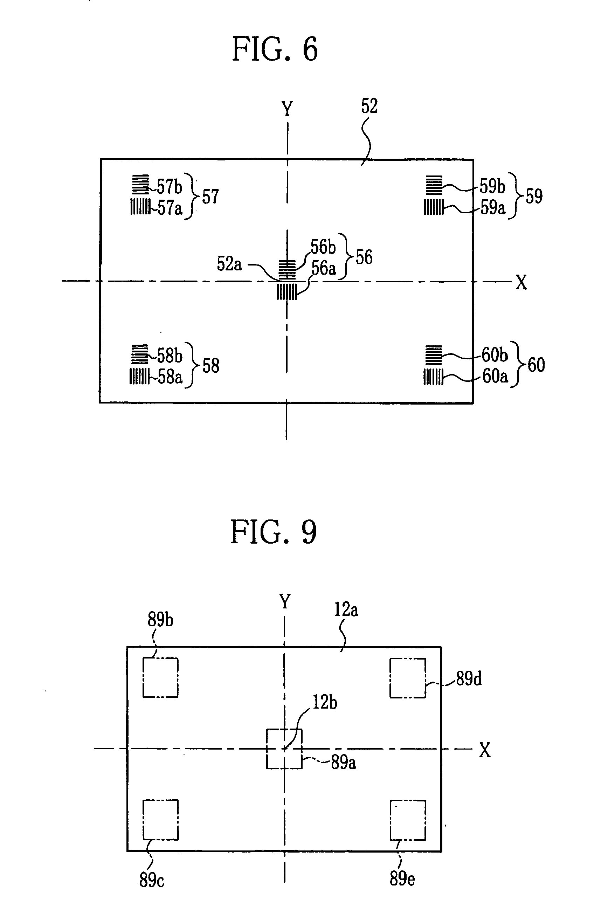

As shown in FIG. 6, the measurement chart 52 has a rectangular shape, and carries a chart surface with a chart pattern. On the chart surface, there are printed a center point 52a and first to fifth chart images 56-60 in the center and in the upper left, the lower left, the upper right and the lower right of each quadrant. The chart images 56-60 are all identical, so-called a ladder chart made up of equally spaced black lines. More specifically, the chart images 56-60 are divided into horizontal chart images 56a-60a of horizontal lines and vertical chart images 56b-60b of vertical lines.

Referring back to FIG. 5, the light collecting unit 42 is arranged to face the chart unit 41 on a Z axis that is orthogonal to the center point 52a of the measurement chart 52. The light collecting unit 42 includes a bracket 42a fixed to the platform 49, and a collecting lens 42b. The collecting lens 42b concentrates the light from the chart unit 41 onto the lens unit 15 through an aperture 42c formed in the bracket 42a.

The lens positioning plate 43 is made of metal or such material to provide rigidity, and has an aperture 43a through which the light concentrated by the collecting lens 42b passes.

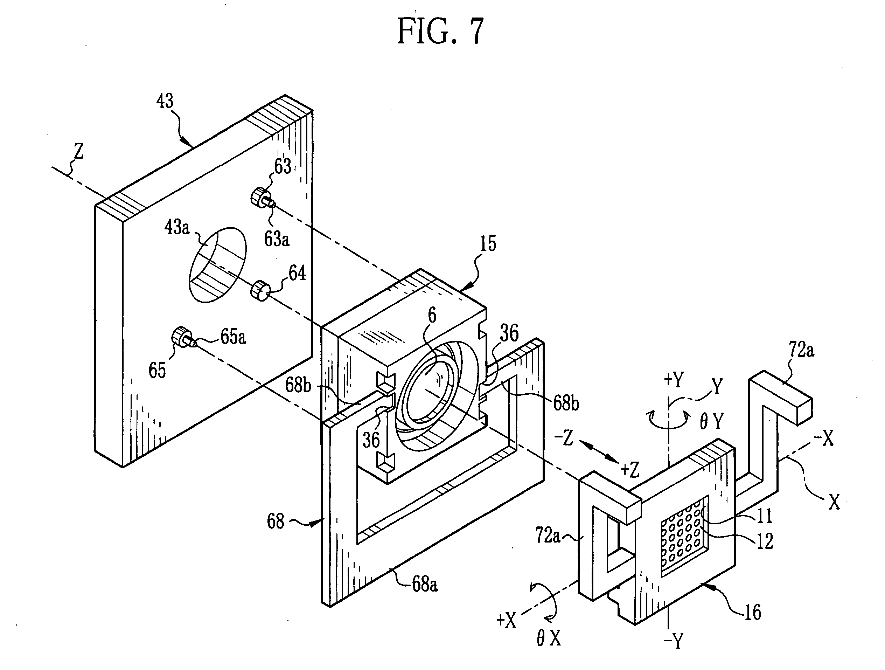

As shown in FIG. 7, the lens positioning plate 43 has three contact pins 63-65 around the aperture 43a on the surface facing the lens holding mechanism 44. The two contact pins 63, 65 on the same diagonal line are provided at the tip thereof with smaller diameter insert pins 63a, 65a respectively. The contact pins 63-65 receive the positioning surfaces 7-9 of the lens unit 15, and the insert pins 63a, 65a fit into the positioning holes 7a, 9a so as to position the lens unit 15.

The lens holding mechanism 44 includes a holding plate 68 for holding the lens unit 15 to face the chart unit 41 on the Z axis, and a first slide stage 69 (see, FIG. 5) for moving the holding plate 68 along the Z axis direction. As shown in FIG. 7, the holding plate 68 has a horizontal base portion 68a to be supported by a stage portion 69a of the first slide stage 69, and a pair of holding arms 68b that extend upward and then laterally to fit into the cutouts 36 of the lens unit 15.

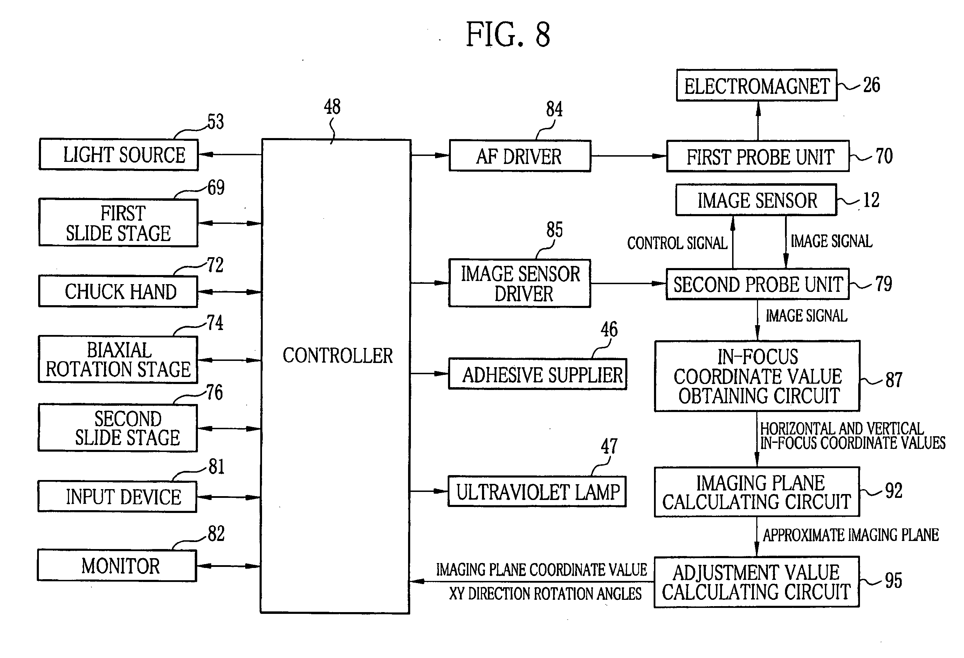

Attached to the holding plate 68 is a first probe unit 70 having a plurality of probe pins 70a to make contact with the electric contact 26a of the electromagnet 26. The first probe unit 70 connects the electromagnet 26 with an AF driver 84 (see FIG. 8) electrically.

In FIG. 5, the first slide stage 69 is a so-called automatic precision stage, which includes a motor (not shown) for rotating a ball screw to move the stage portion 69a engaged with the ball screw in a horizontal direction.

The sensor shift mechanism 45 is composed of a chuck hand 72 for holding the image sensor 16 to orient the imaging surface 12a to the chart unit 41 on the Z axis, a biaxial rotation stage 74 for holding a crank-shaped bracket 73 supporting the chuck hand 72 and adjusting the tilt thereof around two axes orthogonal to the Z axis, and a second slide stage 76 for holding a bracket 75 supporting the biaxial rotation stage 74 and moving it along the Z axis direction.

As shown in FIG. 7, the chuck hand 72 is composed of a pair of nipping claws 72a in a crank shape, and an actuator 72b for moving the nipping claws 72a in the direction of an X axis orthogonal to the Z axis. The nipping claws 72a hold the sensor unit 16 on the flat portions 37 of the frame 29. The chuck hand 72 adjusts the position of the sensor unit 16 held by the nipping claws 72a such that a center 12b of the imaging surface 12a is aligned substantially with an optical axis center of the taking lens 6.

The biaxial rotation stage 74 is a so-called auto biaxial gonio stage which includes two motors (not shown) to turn the sensor unit 16, with reference to the center 12b of the imaging surface 12a, in a $\theta X$ direction around the X axis and in a $\theta Y$ direction around a Y axis orthogonal to the Z axis and the X axis. Thereby, the center 12b of the imaging surface 12a does not deviate from the Z axis when the sensor unit 16 is tilted to the aforesaid directions.

The second slide stage 76 also functions as a measurement position changing means, and moves the sensor unit 16 in the Z axis direction using the biaxial rotation stage 74. The second slide stage 76 is identical to the first slide stage 69, except for size, and a detailed description thereof is omitted.

Attached to the biaxial rotation stage 74 is a second probe unit 79 having a plurality of probe pins 79a to make contact with the electric contacts 13 of the image sensor 12 through the opening 11 of the sensor unit 16. This second probe unit 79 connects the image sensor 12 with an image sensor driver 85 (see FIG. 8) electrically.

When the position of the sensor unit 16 is completely adjusted and the projections 32 of the sensor unit 16 are fitted into the depressions 33, the adhesive supplier 46 introduces ultraviolet curing adhesive into the depressions 33 of the lens unit 15. The ultraviolet lamp 47, composing a fixing means together with the adhesive supplier 46, irradiates ultraviolet rays to the depressions 33 so as to cure the ultraviolet curing adhesive. Alternatively, a different type of adhesive, such as instant adhesive, heat curing adhesive or self curing adhesive may be used.

As shown in FIG. 8, the aforesaid components are all connected to the controller 48. The controller 48 is a microcomputer having a CPU, a ROM, a RAM and other elements configured to control each component based on the control program stored in the ROM. The controller 48 is also connected with an input device 81 including a keyboard and a mouse, and a monitor 82 for displaying setup items, job items, job results and so on.

An AF driver 84, as being a drive circuit for the electromagnet 26, applies an electric current to the electromagnet 26 through the first probe unit 70. An image sensor driver 85, as being a drive circuit for the image sensor 12, enters a control signal to the image sensor 12 through the second probe unit 79.

An in-focus coordinate value obtaining circuit 87 obtains an in-focus coordinate value representing a good-focusing position in the Z axis direction for each of first to fifth imaging positions 89a-89e established, as shown in FIG. 9, on the imaging surface 12a of the image sensor 12. The imaging positions 89a-89e are located on the center 12b and on the upper left, the lower left, the upper right and the lower right of the quadrants, and each have available position and area for capturing the first to fifth chart images 56-60 of the measurement chart 52. A point to note is that the image of the measurement chart 52 is formed upside down and reversed through the taking lens 6. Therefore, the second to fifth chart images 57-60 are formed on the second to fifth imaging positions 89b-89e in the diagonally opposite sides.

When obtaining the in-focus coordinate values of the first to fifth imaging positions 89a-89e, the controller 48 moves the sensor unit 16 sequentially to a plurality of discrete measurement positions previously established on the Z axis. The controller 48 also controls the image sensor driver 85 to capture the first to fifth chart images 56-60 with the image sensor 12 through the taking lens 6 at each measurement position.

The in-focus coordinate value obtaining circuit 87 extracts the signals of the pixels corresponding to the first to fifth imaging positions 89a-89e from the image signals transmitted through the second probe unit 79. Based on these pixel signals, the in-focus coordinate value obtaining circuit 87 calculates a focus evaluation value for each of the measurement positions in the first to fifth imaging positions 89a-89e, and obtains the measurement position providing a predetermined focus evaluation value as the in-focus coordinate value on the Z axis for each of the first to fifth imaging positions 89a-89e.

In this embodiment, a contrast transfer function value (hereinafter, CTF value) is used as the focus evaluation value. The CTF value represents the contrast of an object with respect to a spatial frequency, and the object can be regarded as in focus when the CTF value is high. The CTF value is calculated by dividing a difference of the highest and lowest output levels of the image signals from the image sensor 12 by the sum of the highest and lowest output levels of the image signals. Namely, the CTF value is expressed as Equation 1, where P and Q are the highest output level and the lowest output level of the image signals.

$$\text{CTF value} = (P-Q)/(P+Q) \qquad \text{Equation 1}$$

The in-focus coordinate value obtaining circuit 87 calculates the CTF values in different directions on an XY coordinate plane for each of the measurement positions on the Z axis in the first to fifth imaging positions 89a-89e. It is preferred to calculate the CTF values in any first direction and a second direction orthogonal to the first direction. For example, the present embodiment calculates H-CTF values in a horizontal direction (X direction), i.e., a longitudinal direction of imaging surface 12a, and V- CTF values in a vertical direction (Y direction) orthogonal to the X direction. Subsequently, the in-focus coordinate value obtaining circuit 87 obtains a Z axis coordinate value of the measurement position having the highest H-CTF value as a horizontal in-focus coordinate value. Similarly, in-focus coordinate value obtaining circuit 87 obtains a Z axis coordinate value of the measurement position having the highest V-CTF value as a vertical in-focus coordinate value.

The in-focus coordinate value obtaining circuit 87 enters the horizontal and vertical in-focus coordinate values of the first to fifth imaging positions 89a-89e to an imaging plane calculating circuit 92. The imaging plane calculating circuit 92 transforms ten evaluation points, expressed by the XY coordinate values of the first to fifth imaging positions 89a-89e as the imaging surface 12a overlaps with the XY coordinate plane and by the horizontal and vertical in-focus coordinate values of the first to fifth imaging positions 89a-89e, on a three dimensional coordinate system defined by the XY coordinate plane and the Z axis. Based on the relative position of these evaluation points, the imaging plane calculating circuit 92 calculates an approximate imaging plane defined as a single plane in the three dimensional coordinate system.

To calculate the approximate imaging plane, the imaging plane calculating circuit 92 uses a least square method expressed by an equation: $aX + bY + cZ + d = 0$ (wherein a-d are arbitrary constants). The imaging plane calculating circuit 92 assigns this equation with the coordinate values of the first to fifth imaging positions 89a-89e on the XY coordinate plane and the horizontal or vertical in-focus coordinate value on the Z axis, and calculates the approximate imaging plane.

The information of the approximate imaging plane is entered from the imaging plane calculating circuit 92 to an adjustment value calculating circuit 95. The adjustment value calculating circuit 95 calculates an imaging plane coordinate value representing an intersection point between the approximate imaging plane and the Z axis, and XY direction rotation angles indicating the tilt of the approximate imaging plane around the X axis and the Y axis with respect to the XY coordinate plane. These calculation results are then entered to the controller 48. Based on the imaging plane coordinate value and the XY direction rotation angles, the controller 48 drives the sensor shift mechanism 45 to adjust the position and tilt of the sensor unit 16 such that the imaging surface 12a overlaps with the approximate imaging plane.

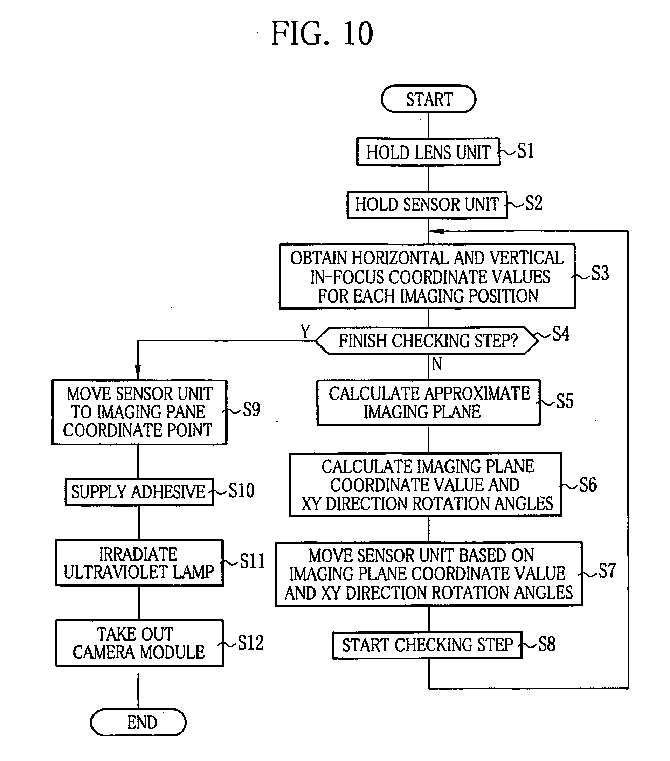

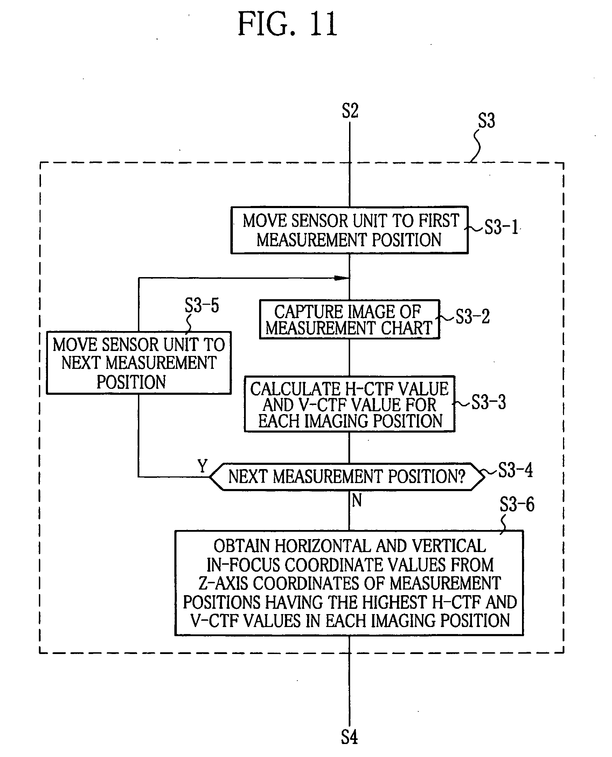

Next, with reference to flowcharts of FIG. 10 and FIG. 11, the operation of the present embodiment is described. Firstly, a step (S1) of holding the lens unit 15 with the lens holding mechanism 44 is explained. The controller 48 controls the first slide stage 69 to move the holding plate 68 and create a space for the lens unit 15 between the lens positioning plate 43 and the holding plate 68. The lens unit 15 is held and moved to the space between the lens positioning plate 43 and the holding plate 68 by a robot (not shown).

The controller 48 detects the movement of the lens unit 15 by way of an optical sensor or the like, and moves the stage portion 69a of the first slide stage 69 close to the lens positioning plate 43. The holding plate 68 inserts the pair of the holding arms 68b into the pair of the cutouts 36, so as to hold the lens unit 15. At this time, the first probe unit 70 makes contact with the electric contact 26a to connect the electromagnet 26 with the AF driver 84 electrically.

After the lens unit 15 is released from the robot, the holding plate 68 is moved closer to the lens positioning plate 43 until the positioning surfaces 7-9 touch the contact pins 63-65, and the positioning holes 7a, 9a fit onto the insert pins 63a, 65a. The lens unit 15 is thereby secured in the Z axis direction as well as in the X and Y directions. Since there are only three positioning surfaces 7-9 and three contact pins 63-65, and only two positioning holes 7a, 9a and two insert pins 63a, 65a on the same diagonal line, the lens unit 15 is not oriented incorrectly.

Next, a step (S2) of holding the sensor unit 16 with the sensor shift mechanism 45 is explained. The controller 48 controls the second slide stage 76 to move the biaxial rotation stage 74 and create a space for the sensor unit 16 between the holding plate 68 and the biaxial rotation stage 74. The sensor unit 16 is held and moved to the space between the holding plate 68 and the biaxial rotation stage 74 by a robot (not shown).

The controller 48 detects the position of the sensor unit 16 by way of an optical sensor or the like, and moves the stage portion 76a of the second slide stage 76 close to the holding plate 68. The sensor unit 16 is then held on the flat portions 37 by the nip claws 72a of the chuck hand 72. Additionally, each probe pin 79a of the second probe unit 79 makes contact with the electric contacts 13 of the image sensor 12, connecting the image senor 12 and the controller 48 electrically. The sensor unit 16 is then released form hold of the robot.

When the lens unit 15 and the sensor unit 16 are held, the horizontal and vertical in-focus coordinate values are obtained for the first to fifth imaging positions 89a-89e on the imaging surface 12a (S3). As shown in FIG. 11, the controller 48 controls the second slide stage 76 to move the biaxial rotation stage 74 closer to the lens holding mechanism 44 until the image sensor 12 is located at a first measurement position where the image sensor 12 stands closest to the lens unit 15 (S3-1).

The controller 48 turns on the light source 53 of the chart unit 41. Then, the controller 48 controls the AF driver 84 to move the taking lens 6 to a predetermined focus position, and controls the image sensor driver 85 to capture the first to fifth chart images 56-60 with the image sensor 12 through the taking lens 6 (S3-2). The image signals from the image sensor 12 are entered to the in-focus coordinate value obtaining circuit 87 through the second probe unit 79.

The in-focus coordinate value obtaining circuit 87 extracts the signals of the pixels corresponding to the first to fifth imaging positions 89a-89e from the image signals entered through the second probe unit 79, and calculates the H-CTF value and the V-CTF value for the first to fifth imaging positions 89a-89e from the pixel signals (S3-3). The H-CTF values and the V-CTF values are stored in a RAM or the like in the controller 48.

The controller 48 moves the sensor unit 16 sequentially to the measurement positions established along the Z axis direction, and captures the chart image of the measurement chart 52 at each measurement position. The in-focus coordinate value obtaining circuit 87 calculates the H-CTF values and the V-CTF values of all the measurement positions for the first to fifth imaging positions 89a-89e (S3-2 to S3-4).

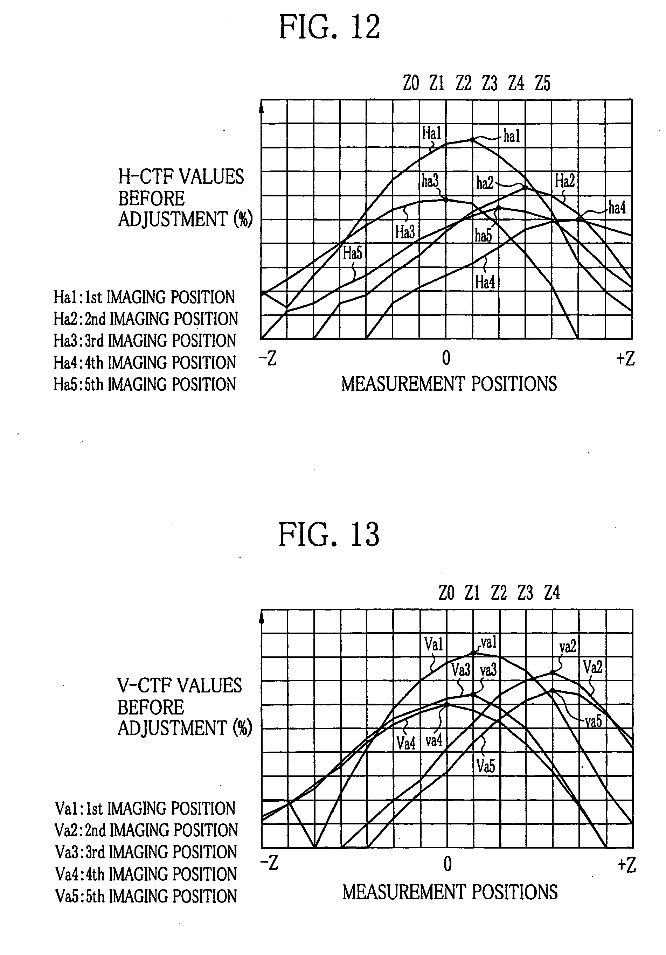

FIG. 12 and FIG. 13 illustrate graphs of the H-CTF values (Ha1-Ha5) and the V-CTF values (Va1-Va5) at each measurement position in the first to fifth measurement positions. In the drawings, a measurement position "0" denotes a designed imaging plane of the taking lens 6. The in-focus coordinate value obtaining circuit 87 selects the highest H-CTF value among Ha1 to Ha2 and the highest V-CTF value among Va1 to Va5 for each of the first to fifth imaging positions 89a-89e, and obtains the Z axis coordinate of the measurement positions providing the highest H-CTF value and the highest V-CTF value as the horizontal in-focus coordinate value and the vertical in-focus coordinate value (S3-S6).

In FIG. 12 and FIG. 13, the highest H-CTF values and the highest V-CTF values are provided at the positions ha1-ha5 and va1-va5 respectively, and the Z axis coordinates of the measurement positions Z0-Z5 and Z0-Z4 are obtained as the horizontal in-focus coordinate values and the vertical in-focus coordinate values.

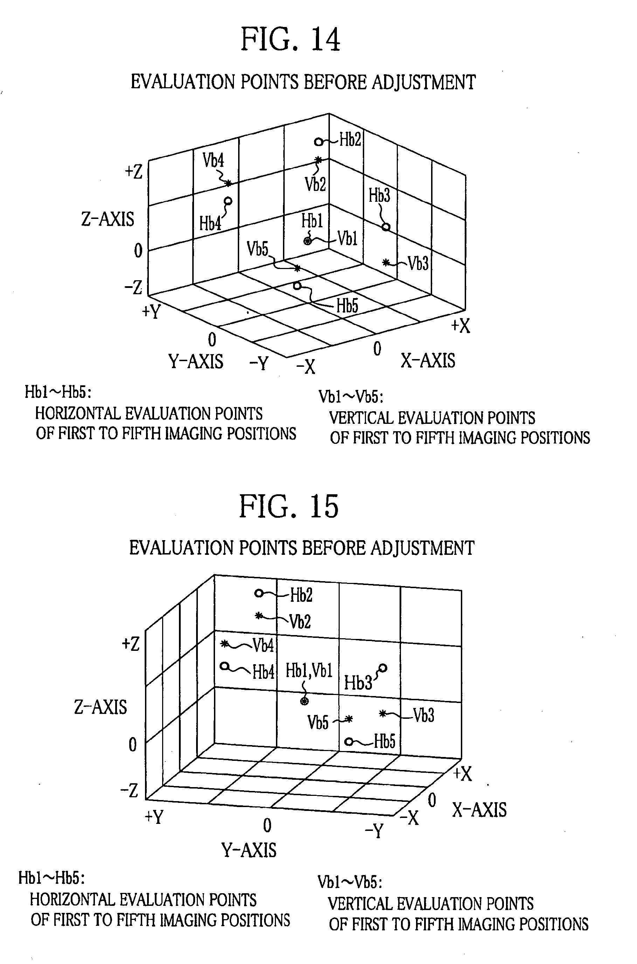

FIG. 14 and FIG. 15 illustrates graphs in an XYZ three dimensional coordinate system plotting ten evaluation points Hb1-Hb5 and Vb-1-Vb5, expressed by the XY coordinate values of the first to fifth imaging positions 89a-89e as the imaging surface 12a overlaps with the XY coordinate plane and by the horizontal and vertical in-focus coordinate values of the first to fifth imaging positions 89a-89e. As is obvious from these graphs, an actual imaging plane of the image sensor 12, defined by the horizontal and vertical evaluation points Hb1-Hb5 and Va1-Va5, deviates from the designed imaging plane at the position "0" on the Z axis due to manufacturing errors in each component and an assembly error.

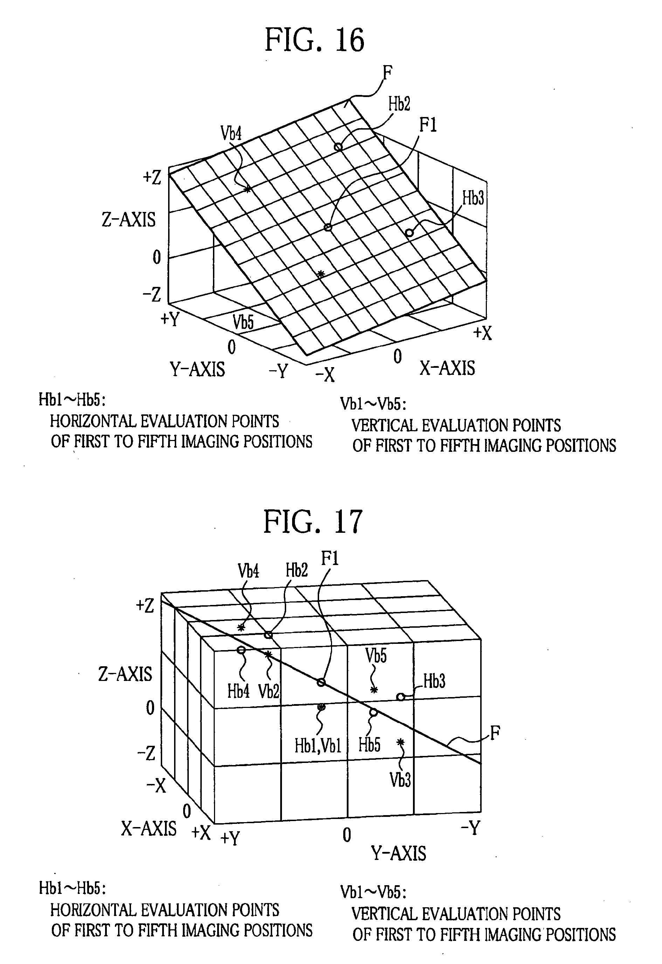

The horizontal and vertical in-focus coordinate values are entered from the in-focus coordinate value obtaining circuit 87 to the imaging plane calculating circuit 92. The imaging plane calculating circuit 92 calculates an approximated imaging plane by the least square method (S5). As shown in FIG. 16 and FIG. 17, an approximate imaging plane F calculated by the imaging plane calculating circuit 92 is established in good balance based on the relative position of the evaluation points Hb1-Hb5 and Vb1-Vb5.

The information of the approximate imaging plane F is entered from the imaging plane calculating circuit 92 to the adjustment value calculating circuit 95. As shown in FIG. 16 and FIG. 17, the adjustment value calculating circuit 95 calculates an imaging plane coordinate value F1 representing an intersection point between the approximate imaging plane F and the Z axis, and also calculates the XY direction rotation angles indicating the tilt of the approximate imaging plane F around the X and Y directions with respect to the XY coordinate plane. These calculation results are entered to the controller 48 (S6).

Receiving the imaging plane coordinate value F1 and the XY direction rotation angles, the controller 48 controls the second slide stage 76 to move the sensor unit 16 in the Z axis direction so that the center 12b of the imaging surface 12a is located on the point of the imaging plane coordinate value F1. Also, the controller 48 controls the biaxial rotation stage 74 to adjust the angles of the sensor unit 16 to a θX direction and a θY direction so that the imaging surface 12a overlaps with the approximate imaging plane (S7).

After the positional adjustment of the sensor unit 16, a checking step for checking the in-focus coordinate values of the first to fifth imaging positions 89a-89e (S8) is performed. This checking step repeats all the process in the aforesaid step S3.

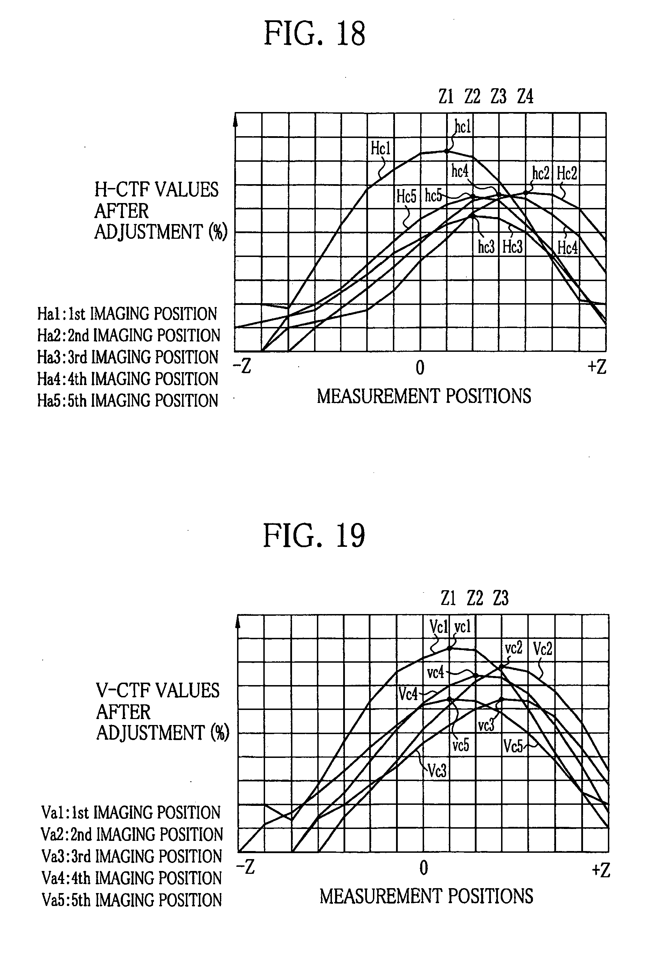

FIG. 18 and FIG. 19 illustrate graphs of the H-CTF values Hc1-Hc5 and the V-CTF values Vc1-Vc5 calculated in the checking step for each measurement position in the first to fifth imaging positions 89a-89e. As is obvious from the graphs, the highest H-CFT values hc1-hc5 and the highest V-CTF values vc1-vc5 are gathered between the measurement positions Z1-Z4 and Z1-Z3 respectively after the positional adjustment of the sensor unit 16.

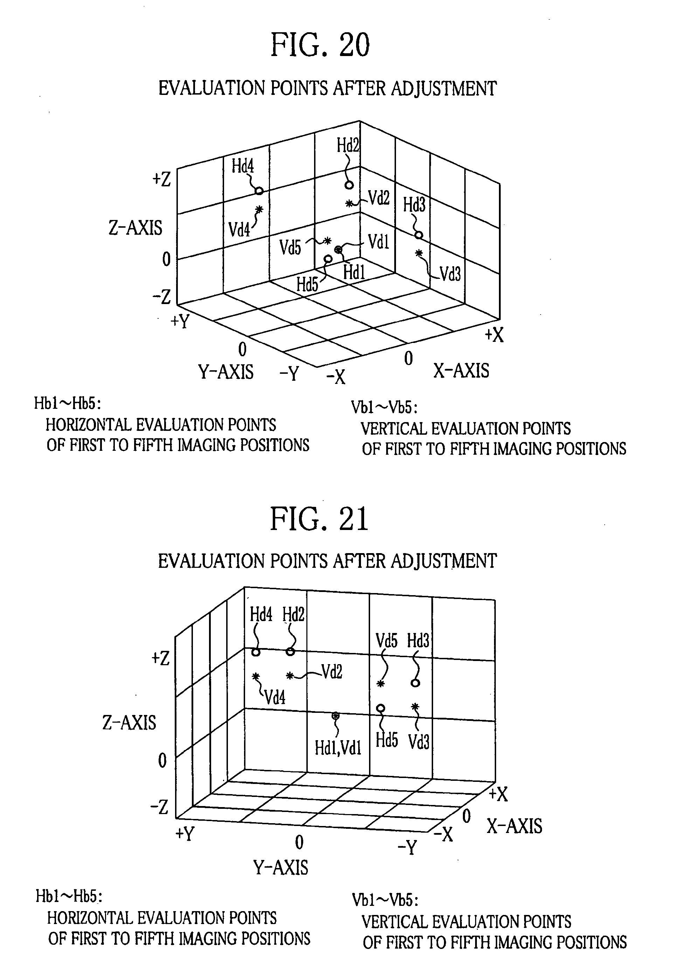

FIG. 20 and FIG. 21 illustrate graphs in which the horizontal and vertical in-focus coordinate values, obtained from the H-CTF values hc1-hc5 and the V-CTF values vc1-vc5, are transformed into evaluation points hd1-hd5 and vd1-vd5 in the XYZ three dimensional coordinate system. As is obvious from the graphs, variation of the evaluation points in the horizontal and vertical directions are reduced in each of the first to fifth imaging positions 89a-89e after the positional adjustment of the sensor unit 16.

After the checking step (S4), the controller 48 moves the sensor unit 16 in the Z axis direction until the center 12b of the imaging surface 12a is located at the point of the imaging plane coordinate value F1 (S9) . The controller 48 then introduces ultraviolet curing adhesive into the depressions 33 from the adhesive supplier 46 (S10), and irradiates the ultraviolet lamp 47 to cure the ultraviolet curing adhesive (S11). The camera module 2 thus completed is taken out by a robot (not shown) from the camera module manufacturing apparatus 40 (S12).

As described above, the position of the sensor unit 16 is adjusted to overlap the imaging surface 12a with the approximate imaging plane F, and it is therefore possible to obtain high-resolution images. Additionally, since all the process from obtaining the in-focus coordinate values for the first to fifth imaging positions 89a-89e, calculating the approximate imaging plane, calculating the adjustment values based on the approximate imaging plane, adjusting focus and tilt, and fixing the lens unit 15 and sensor unit 16 are automated, it is possible to manufacture a number of the camera modules 2 beyond a certain level of quality in a short time.

Next, the second to fourth embodiments of the present invention are described. Hereinafter, components that remain functionally and structurally identical to those in the first embodiment are designated by the same reference numerals, and the details thereof are omitted.

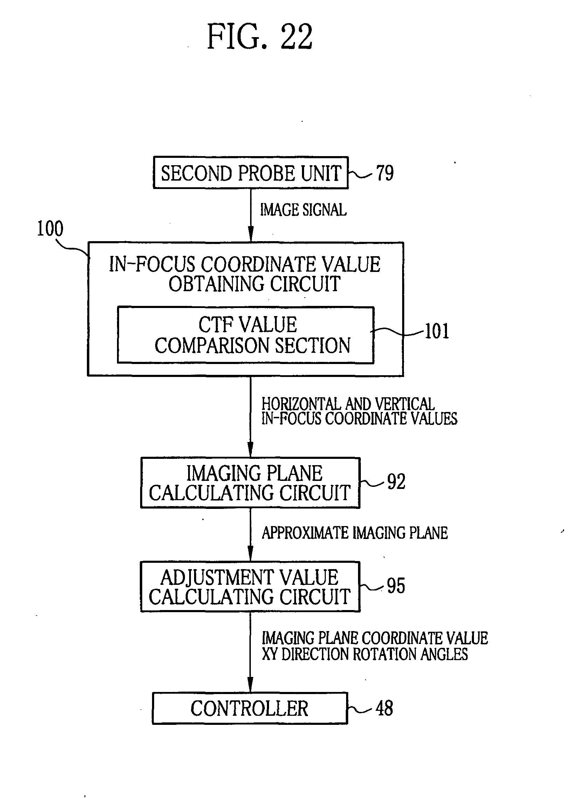

The second embodiment uses an in-focus coordinate value obtaining circuit 100 shown in FIG. 22 in place of the in-focus coordinate value obtaining circuit 87 shown in FIG. 8. Similar to the first embodiment, the in-focus coordinate value obtaining circuit 100 obtains the H-CTF values and the V-CTF values for plural measurement positions in the first to fifth imaging positions 89a-89e. This in-focus coordinate value obtaining circuit 100 includes a CTF value comparison section 101 for comparing the H-CTF values and the V-CTF values of two consecutive measurement positions.

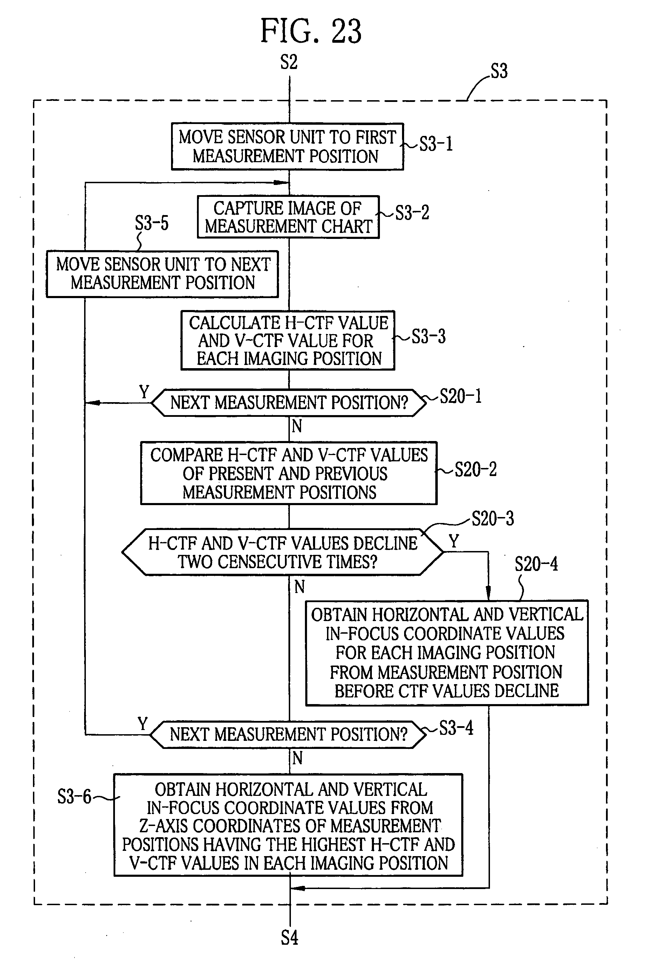

In the step S3 of FIG. 10, the controller 48 controls the in-focus coordinate value obtaining circuit 100 and the CTF value comparison section 101 to perform the steps shown in FIG. 23. The controller 48 moves the sensor unit 16 sequentially to each measurement position, and directs the in-focus coordinate value obtaining circuit 100 to calculate the H-CTF values and the V-CTF values at each measurement position in the first to fifth imaging positions 89a-89e (S3-1 to S3-5, S20-1).

Every time the H-CTF value and the V-CTF value are calculated at one measurement position, the in-focus coordinate value obtaining circuit 100 controls the CTF value comparison section 101 to compare the H-CTF values and the V-CTF values of consecutive measurement positions (S20-2). Referring to the comparison results of the CTF value comparison section 101, the controller 48 stops moving the sensor unit 16 to the next measurement position when it finds the H-CTF and V-CTF values decline, for example, two consecutive times (S20-4). Thereafter, the in-focus coordinate value obtaining circuit 100 obtains the Z axis coordinate values of the measurement positions before the H-CTF and V-CTF values decline, as the horizontal and vertical in-focus coordinate values (S20-5). As shown in FIG. 12 and FIG. 13, the CTF values do not rise once they decline, and thus the highest CTF values can be obtained in the middle of the process.

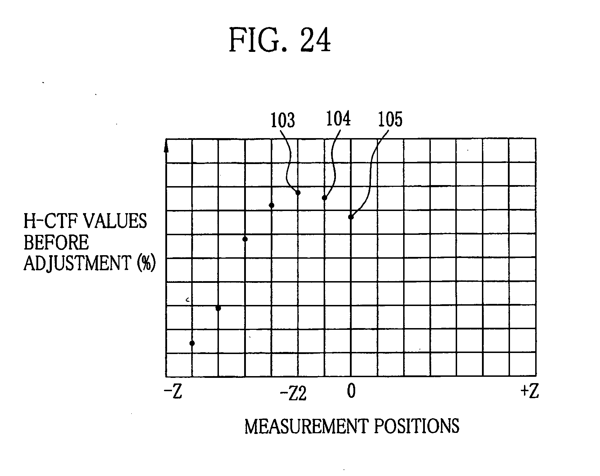

In FIG. 24, two consecutive H-CTF values 104, 105 decline from the H-CTF value 103. Therefore, the Z axis coordinate of the measurement position -Z2 corresponding to the H-CTF value 103 is obtained as the horizontal in-focus coordinate value.

The imaging plane calculating circuit 92, as is in the first embodiment, calculates the approximate imaging plane F based on the horizontal and vertical in-focus coordinate values entered from the in-focus coordinate value obtaining circuit 100. From the approximate imaging plane F, the adjustment value calculating circuit 95 calculates the imaging plane coordinate value F1 and the XY direction rotation angles. Then, the position of the sensor unit 16 is adjusted to overlap the imaging surface 12a with the approximate imaging plane F (S5-S7). When the checking step S8 is finished (S4), the sensor unit 16 is fixed to the lens unit 15 (S9-S12).

The first embodiment may take time because the H-CTF values and the V-CTF values are calculated at all the measurement positions on the Z axis for the first to fifth imaging positions 89a-89e before the horizontal and vertical in-focus coordinate values are obtained. By way of contrast, the present embodiment stops calculating the H-CTF and V-CTF values when the H-CTF and V-CTF values reach the highest in the middle of the process, the time to obtain the horizontal and vertical in-focus coordinate values can be reduced.

Next, the third embodiment of the present invention is described. The third embodiment uses an in-focus coordinate value obtaining circuit 110 shown in FIG. 22 in place of the in-focus coordinate value obtaining circuit 87 shown in FIG. 8. Similar to the first embodiment, the in-focus coordinate value obtaining circuit 110 obtains the H-CTF values and the V-CTF values at plural measurement positions in the first to fifth imaging positions 89a-89e. Additionally, the in-focus coordinate value obtaining circuit 110 includes an approximate curve generating section 112.

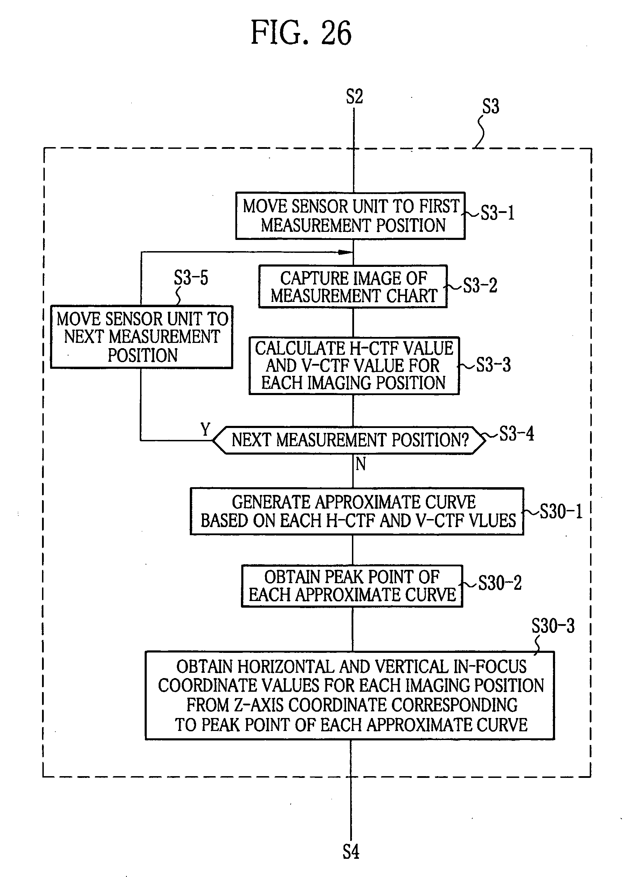

In the step S3 of FIG. 10, the controller 48 controls the in-focus coordinate value obtaining circuit 110 and the approximate curve generating section 112 to perform the steps shown in FIG. 26. The controller 48 directs the in-focus coordinate value obtaining circuit 110 to calculate the H-CTF values and the V-CTF values at each measurement positions for the first to fifth imaging positions 89a-89e (S3-1 to S3-5).

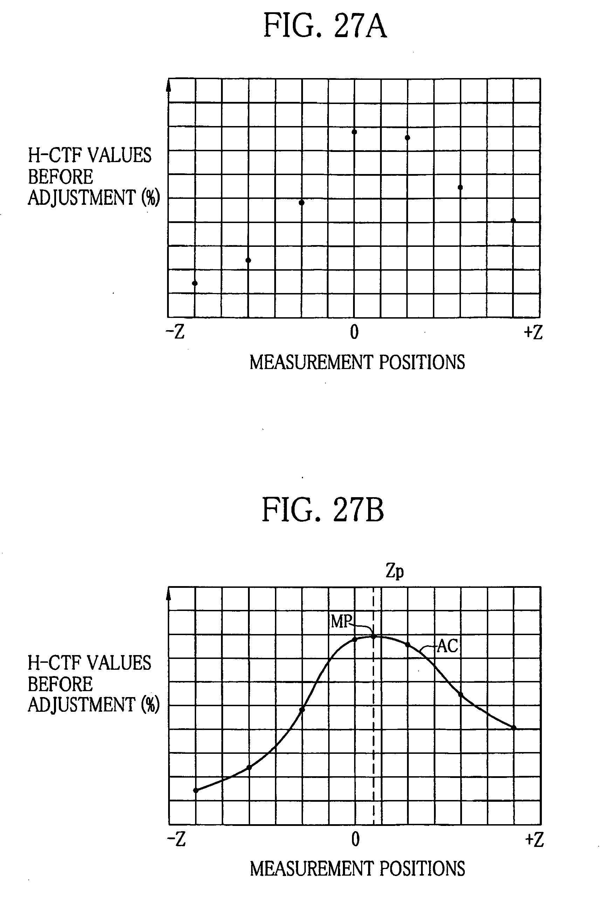

As shown in FIG. 27A, when the H-CTF values and the V-CTF values of the first to fifth imaging positions 89a-89e are calculated at all the measurement positions, the approximate curve generating section 112 applies a spline interpolation to each of these discretely obtained H-CTF and V-CTF values, and generates an approximate curve AC, shown in FIG. 27B, corresponding to each CTF value (S30-1).

When the approximate curve AC is generated from the approximate curve generating section 112, the in-focus coordinate value obtaining circuit 110 finds a peak value MP of the approximate curve AC (S30-2). Then, in-focus coordinate value obtaining circuit 110 obtains a Z axis position Zp corresponding to the peak value MP, as the horizontal and vertical in-focus coordinate values for that imaging position (S30-3).

Thereafter, as is in the first and second embodiments, the imaging plane calculating circuit 92 calculates the approximate imaging plane F based on the horizontal and vertical in-focus coordinate values entered from the in-focus coordinate value obtaining circuit 110. From the approximate imaging plane F, the adjustment value calculating circuit 95 calculates the imaging plane coordinate value F1 and the XY direction rotation angles. Thereafter, the position of the sensor unit 16 is adjusted to overlap the imaging surface 12a with the approximate imaging plane F (S5-S7) . When the checking step S8 is finished (S4), the sensor unit 16 is fixed to the lens unit 15 (S9-S12).

In the first and second embodiments, the measurement positions having the highest H-CTF value and the highest V-CTF value are obtained as the horizontal in-focus coordinate value and the vertical in-focus coordinate value for each of the first to fifth imaging positions 89a-89e. Since the CTF values are obtained discretely, however, the highest CTF value may lie between the measurement positions in the first and second embodiment. This erroneous highest value yields erroneous horizontal and vertical in-focus coordinate values.

In the third embodiment, by way of contrast, the approximate curve AC is generated first based on the CTF values, and the position corresponding to the peak value MP of the approximate curve AC is obtained as the horizontal and vertical in-focus coordinate values for that imaging position. Therefore, the horizontal and vertical in-focus coordinate values can be obtained with higher precision than the first and second embodiments. This improvement enables skipping some measurement positions (or increasing the intervals between the measurement positions), and thus the position of the sensor unit 16 can be adjusted in a shorter time than the first and second embodiments.

Although in the third embodiment the approximate curve AC is generated using the spline interpolation, a different interpolation method, such as a Bezier interpolation or an Nth polynomial interpolation may be used to generate the approximate curve AC. Furthermore, the approximate curve generating section 112 may be disposed outside the in-focus coordinate value obtaining circuit 110, although it is included in the in-focus coordinate value obtaining circuit 110 in the above embodiment.

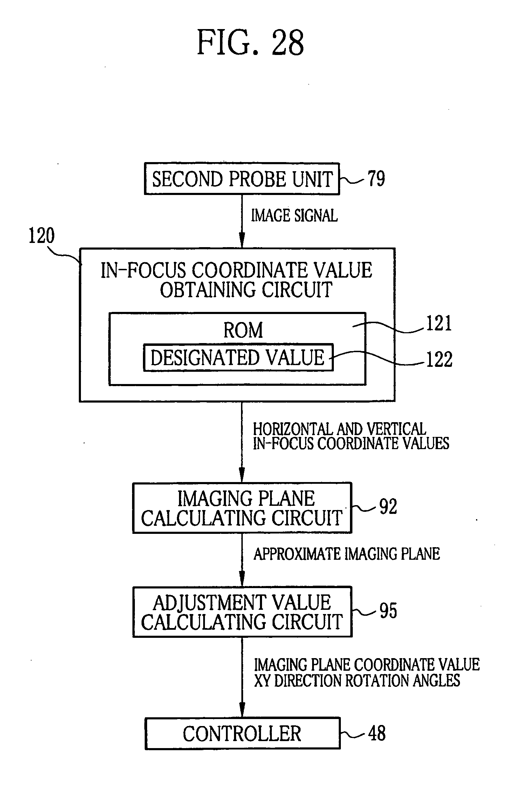

Next, the fourth embodiment of the present invention is described. The fourth embodiment uses an in-focus coordinate value obtaining circuit 120 shown in FIG. 28 in place of the in-focus coordinate value obtaining circuit 87 shown in FIG. 8. Similar to the first embodiment, the in-focus coordinate value obtaining circuit 120 obtains the H-CTF values and the V-CTF values at plural measurement positions in the first to fifth imaging positions 89a-89e. Additionally, the in-focus coordinate value obtaining circuit 120 includes a ROM 121 storing a designated value 122 used to obtain the horizontal and vertical in-focus coordinate values.

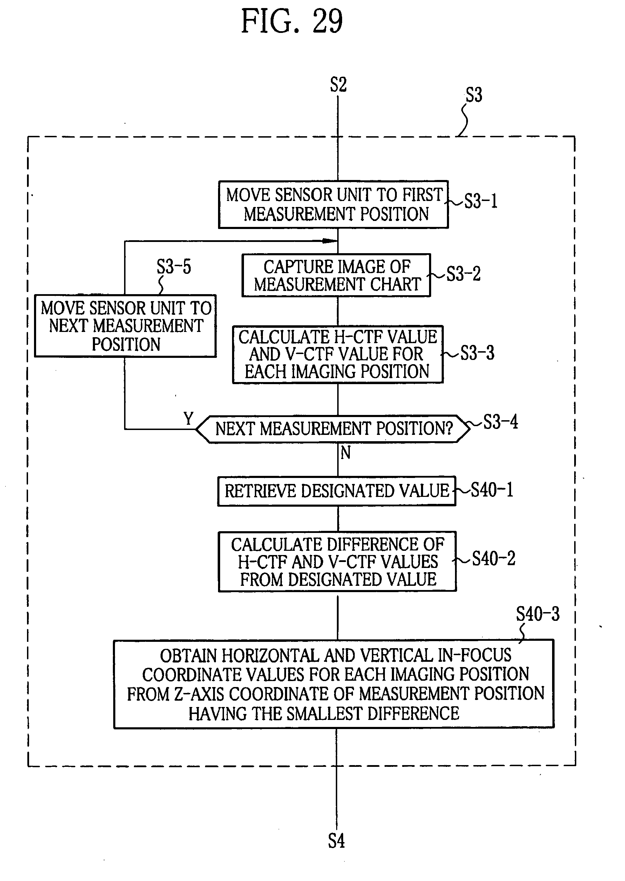

In the step S3 of FIG. 10, the controller 48 controls the in-focus coordinate value obtaining circuit 120 and the ROM 121 to perform the steps shown in FIG. 29. The controller 48 directs the in-focus coordinate value obtaining circuit 120 to calculate the H-CTF values and the V-CTF values at each measurement positions for the first to fifth imaging positions 89a-89e (S3-1 to S3-5).

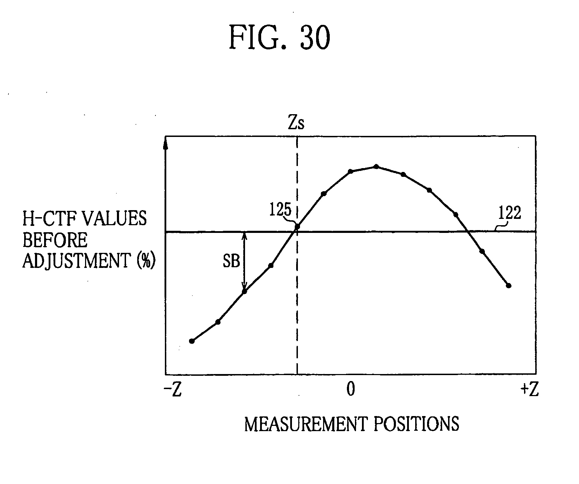

The in-focus coordinate value obtaining circuit 120 retrieves the designated value 122 from the ROM 121 after the H-CTF values and the V-CTF values are calculated at all the measurement positions for the first to fifth imaging positions 89a-89e (S40-1). Thereafter, the in-focus coordinate value obtaining circuit 120 subtracts the H-CTF value and the V-CTF value from the designated value 122 so as to derive a difference SB for each measurement position (S40-2) . The in-focus coordinate value obtaining circuit 100 obtains the Z axis coordinate of the measurement position having the smallest difference SB as the horizontal and vertical in-focus coordinate values for that imaging position (S40-3). In FIG. 30, an H-CTF value 125 has the smallest difference SB, and the Z axis coordinate of a measurement position Zs corresponding to the H-CTF value 125 is obtained as the horizontal in-focus coordinate value.

Thereafter, as is in the first to third embodiments, the imaging plane calculating circuit 92 calculates the approximate imaging plane F based on the horizontal and vertical in-focus coordinate values entered from the in-focus coordinate value obtaining circuit 120. From the approximate imaging plane F, the adjustment value calculating circuit 95 calculates the imaging plane coordinate value F1 and the XY direction rotation angles. Then, the position of the sensor unit 16 is adjusted to overlap the imaging surface 12a with the approximate imaging plane F (S5-S7). When the checking step S8 is finished (S4), the sensor unit 16 is fixed to the lens unit 15 (S9-S12).

Generally speaking, photographs are perceived as better image quality when they have an entirely uniform resolution than when they have high resolution spots in places. In the first to third embodiments, the horizontal and vertical in-focus coordinate values are obtained from the positions on the Z axis having the highest H-CTF value and the highest V-CTF value for the first to fifth imaging positions 89a-89e. Therefore, in the first to third embodiments, if the H-CTF values or the V-CTF values vary between the four-cornered imaging positions 89b-89e, they may still vary even after the positional adjustment of the sensor unit 16, making the resultant photographs perceived as poor image quality.

In the fourth embodiment, by way of contrast, the differences SB from the designated value 122 are calculated, and the measurement positions having the smallest difference SB are determined as the horizontal and vertical in-focus coordinate values. Since each in-focus coordinate value is shifted toward the designated value 122, adjusting the position of the sensor unit 16 based on the in-focus coordinate values serves to reduce the variation of the H-CTF values and the V-CTF values of the first to fifth imaging positions 89a-89e. As a result, the camera module 2 of this embodiment can produce images with an entirely uniform resolution to be perceived as good image quality.

The designated value 122 may be determined as needed according to a designed value and other design conditions of the taking lens 6. Additionally, the lowest value or an averaged value of each CTF value may be used as the designated value.

Although the designated value 122 is stored in the ROM 121 in the above embodiment, it may be stored in a common storage medium, such as a hard disk drive, a flash memory or such nonvolatile semiconductor memory, or a compact flash (registered trademark). Alternatively, the designated value 122 may be retrieved from an internal memory of the camera module manufacturing apparatus 40, or retrieved from a memory in the camera module 2 by way of the second probe unit 79, or retrieved from a separate device through a network. It is also possible to store the designated value 122 in a read/write memory medium such as a flash memory, and rewrite the designated value 122 using the input device 81. Additionally, the designated value 122 may be entered before the adjusting position of process begins.

The forth embodiment may be combined with the third embodiment. In this case, the approximate curve AC is generated first, and the differences SB between the approximate curve AC and the designated value 122 are calculated. Then, the measurement position having the smallest difference SB is determined as the horizontal and vertical in-focus coordinate values for each of the first to fifth imaging positions 89a-89e.

While the above embodiments are described using the CTF values as the focus evaluation values, measurement of the in-focus coordinate values may be performed using resolution values, MTF values and other evaluation methods and evaluation values that evaluate the degree of focusing.

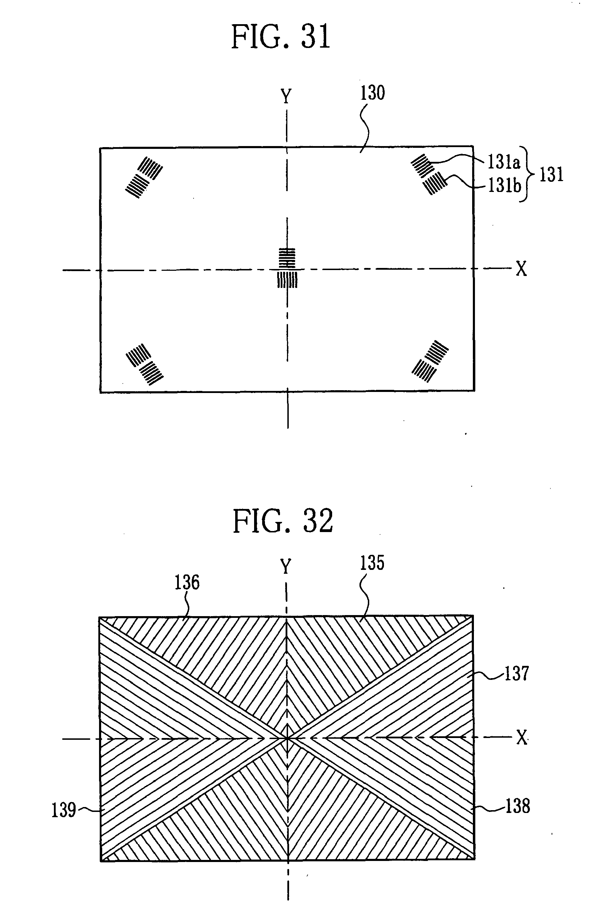

While the above embodiments use the H-CTF value and the V-CTF value that are the CTF values in the horizontal direction and vertical direction, it is possible to calculate S-CTF values in a radial direction of the taking lens and T-CTF values in the direction orthogonal to the radial direction with using a measurement chart 130 shown in FIG. 31 having chart images 131 each composed of lines 131a in the radial direction of the taking lens and lines 131b orthogonal to the radial direction. It is also possible to calculate the S-CTF and T-CTF value set as well as the H-CTF and V-CTF value set at all the measurement positions, or to change the CTF values to be calculated at each imaging position. Alternatively, any one of the H-CTF, V-CTF, S-CTF and T-CTF values or a desired combination thereof may be calculated to measure the in-focus coordinate values.

As shown in FIG. 32, it is possible to use a measurement chart 135 whose chart surface is divided along the X axis, Y axis and two diagonal directions so that each of first to fourth quadrants 136-139 is made up of two segments each having a set of parallel lines at right angle to each other. Since the chart pattern is identical at any position on a diagonal line, the measurement chart 135 can be used for adjusting position of image sensors of different field angles. Note that two segments in each quadrant may have a horizontal line set and a vertical line set respectively.

Although the measurement chart 52 and the lens unit 15 are stationary in the above embodiments, at lest one of them may be moved in the Z axis direction. In this case, the distance between the measurement chart 52 and the lens barrel 20 is measured with a laser displacement meter and adjusted to a predetermined range before positional adjustment of the sensor unit 16. This enables adjusting the position of the sensor unit with higher precision.

The position of the sensor unit 16 is adjusted one time in the above embodiments, but the sensor unit may be adjusted plural times. Although the above embodiments exemplify the positional adjustment of the sensor unit 16 in the camera module, the present invention is applicable to the positional adjustment of an image sensor incorporated in a general digital camera.

Although the present invention has been fully described by the way of the preferred embodiments thereof with reference to the accompanying drawings, various changes and modifications will be apparent to those having skill in this field. Therefore, unless otherwise these changes and modifications depart from the scope of the present invention as defined by the claims, they should be construed as included therein.

**Claims**

1. A method for adjusting position of an image sensor **characterized in** comprising:

   (A) an in-focus coordinate value obtaining step including steps of:

   placing a taking lens (6) and an image sensor (12) for capturing a chart image formed by said taking lens on a Z axis orthogonal to a measurement chart (52, 130, 135);
   capturing said chart image while moving said taking lens (6) or said image sensor (12) sequentially to a plurality of discrete measurement positions previously established on said Z axis;
   calculating a focus evaluation value indicating a degree of focus at each said measurement positions in plural imaging positions (89a-89e) based on image signals obtained in at least five said imaging positions (89a-89e) on an imaging surface (12a) of said image sensor (12); and
   obtaining a Z axis coordinate of the measurement position providing a predetermined focus evaluation value as an in-focus coordinate value for each of said imaging positions (89a-89e);

   (B) an imaging plane calculating step including steps of:

   transforming at least five evaluation points in a three dimensional coordinate system composed of an XY coordinate plane orthogonal to said Z axis, each of said evaluation points being expressed by a combination of XY coordinate values of said imaging positions (89a-89e) obtained when said imaging surface (12a) overlaps with said XY coordinate plane, and said in-focus coordinate values on said Z axis of said imaging positions (89a-89e); and
   calculating an approximate imaging plane defined as a single plane in said three dimensional coordinate system based on the relative position of said evaluation points;

   (C) an adjustment value calculating step for calculating an imaging plane coordinate value representing an intersection point between said approximate imaging plane and said Z axis, and rotation angles of said approximate imaging plane around an X axis and an Y axis with respect to said XY coordinate plane; and
   (D) an adjusting step for adjusting position on said Z axis and tilt around said X and Y axes of said image sensor (12) based on said imaging plane coordinate value and said rotation angles so that said imaging surface (12a) overlaps with said approximate imaging plane.

2. The method for adjusting position of an image sensor as defined in claim 1, **characterized in that** said in-focus coordinate value obtaining step, a Z axis coordinate of the measurement position providing the highest focus evaluation value is obtained as said in-focus coordinate value for each of said imaging positions (89a-89e).

3. The method for adjusting position of an image sensor as defined in claim 1, **characterized in that** said in-focus coordinate value obtaining step further includes steps of:

   comparing said focus evaluation values of the consecutive measurement positions in each of said imaging positions (89a-89e); and
   stopping moving said taking lens (6) or said image sensor (12) to next measurement position when said evaluation value continually decreases for a predetermined number of consecutive times, and obtaining a Z axis coordinate of the measurement position before said evaluation value decreases as said in-focus coordinate value.

4. The method for adjusting position of an image sensor as defined in claim 1, **characterized in that** said in-focus coordinate value obtaining step further includes steps of:

   generating an approximate curve from a plurality of evaluation points expressed by a combination of Z axis coordinate values of said measurement positions and said focus evaluation values at said measurement positions for each of said imaging positions (89a-89e); and
   obtaining a Z axis position corresponding to the highest focus evaluation value derived from said approximate curve as said in-focus coordinate value.

5. The method for adjusting position of an image sensor as defined in claim 1, **characterized in that** said in-focus coordinate value obtaining step further includes steps of:

calculating a difference between each focus evaluation value at each of said measurement positions and a predetermined designated value for each of said imaging positions (89a-89e); and

obtaining a Z axis position of the measurement position having the smallest said difference.

6. The method for adjusting position of an image sensor as defined in claim 1, **characterized in that** said focus evaluation values are contrast transfer function values.

7. The method for adjusting position of an image sensor as defined in claim 6, **characterized in that** said in-focus coordinate value obtaining step further includes steps of:

calculating said contrast transfer function value in a first direction and a second direction orthogonal to said first direction on said XY coordinate plane for each said measurement position in said imaging positions (89a-89e); and

obtaining first and second in-focus coordinates separately in each of said first and

second directions for each of said imaging positions (89a-89e),

and wherein said imaging plane calculating step includes steps of:

obtaining at least ten evaluation points (Hb1-Hb5, Vb1-Vb5) from said first and second in-focus coordinates for each of said imaging positions (89a-89e); and

calculating said approximate imaging plane based on the relative position of said evaluation points (Hb1-Hb5, Vb1-Vb5).

8. The method for adjusting position of an image sensor as defined in claim 7, **characterized in that** said first direction is a horizontal direction, and said second direction is a vertical direction.

9. The method for adjusting position of an image sensor as defined in claim 7, **characterized in that** said first direction is a radial direction of said taking lens (6), and said second direction is an orthogonal direction to said radial direction.

10. The method for adjusting position of an image sensor as defined in claim 1, **characterized in that** said five imaging positions (89a-89e) are the center (12b) and an area in a different quadrant of said imaging surface (12a).

11. The method for adjusting position of an image sensor as defined in claim 1, **characterized in that** in said in-focus coordinate obtaining step an identical chart pattern is formed on each of said imaging positions (89a-89e).

12. The method for adjusting position of an image sensor as defined in claim 1, **characterized in** further comprising: a checking step for running through said in-focus coordinate obtaining step once again after said adjusting step so as to check said in-focus coordinate value of each of said imaging positions (89a-89e).

13. The method for adjusting position of an image sensor as defined in claim 1, **characterized in that** said in-focus coordinate value obtaining step, said imaging plane calculating step, said adjustment value calculating step and said adjusting step are repeated several times so as to overlap said imaging surface (12a) with said approximate imaging plane.

14. A method for manufacturing a camera module **characterized in** comprising steps of:

performing the image sensor adjusting position of method as defined in claim 1 so as to adjust position of a sensor unit (16) having an image sensor (12) with respect to a lens unit (15) having a taking lens (6); and
fixing said sensor unit (16) to said lens unit (15).

15. An apparatus for manufacturing a camera module **characterized in** comprising:

a measurement chart (52, 130, 135) having a chart pattern;
a lens unit holder (44) for holding a lens unit (15) having a taking lens (6) and for placing said lens unit (15) on a Z axis orthogonal to said measurement chart (52, 130, 135);
a sensor unit holder (45) for holding a sensor unit (16) having an image sensor (12) so as to place said sensor unit (16) on said Z axis, and for changing position of said sensor unit (16) on said Z axis and tilt of said sensor unit (16) around X and Y axes orthogonal to said Z axis;
a measurement position changer for moving said lens unit holder (44) or said sensor unit holder (45) so that said taking lens (6) or said image sensor (12) is placed sequentially to a plurality of discrete measurement positions previously established on said Z axis;

a sensor controller (48) for controlling said image sensor (12) to capture a chart image formed by said taking lens (6) at each of said measurement positions (89a-89e);

an in-focus coordinate obtaining device (87) for calculating a focus evaluation value indicating a degree of focus at each said measurement positions in plural imaging positions (89a-89e) based on image signals obtained in at least five said imaging positions (89a-89e) on an imaging surface (12a) of said image sensor (12), and for obtaining a Z axis coordinate of the measurement position providing a predetermined focus evaluation value as an in-focus coordinate value for each of said imaging positions (89a-89e);

an imaging plane calculating device (92) for transforming at least five evaluation points in a three dimensional coordinate system composed of an XY coordinate plane orthogonal to said Z axis, each of said evaluation points being expressed by a combination of XY coordinate values of said imaging positions (89a-89e) obtained when said imaging surface overlaps with said XY coordinate plane, and said in-focus coordinate values on said Z axis of said imaging positions (89a-89e), and for calculating an approximate imaging plane defined as a single plane in said three dimensional coordinate system based on the relative position of said evaluation points;

an adjustment value calculating device (95) for calculating an imaging plane coordinate value representing an intersection point between said approximate imaging plane and

said Z axis, and rotation angles of said approximate imaging plane around an X axis and

an Y axis with respect to said XY coordinate plane; and an adjuster (48) for driving said sensor unit holder (45) based on said a imaging plane coordinate value and said rotation angles around said X and Y axes so as to adjust position of said image sensor (12) on said Z axis and tilt of said image sensor (12) around said X and Y axes until said imaging surface (12a) overlaps said approximate imaging plane.

16. The apparatus for manufacturing a camera module as defined in claim 15, **characterized in** further comprising:

a fixing device (46) for fixing said lens unit and said sensor unit after adjustment of said image sensor (12).

17. The apparatus for manufacturing a camera module as defined in claim 15, **characterized in that** said sensor unit holder (45) includes:

a holding mechanism (72) for holding said sensor unit (16);
a biaxial rotation stage (74) for tilting said holding mechanism (72) around said X axis
and said Y axis; and
a slide stage (76) for moving said biaxial rotation stage (74) along said Z axis.

18. The apparatus for manufacturing a camera module as defined in claim 15, **characterized in that** said sensor unit holder (45) further includes a sensor connector (79a) for electrically connecting said image sensor (12) and said sensor controller (48).

19. The apparatus for manufacturing a camera module as defined in claim 15, **characterized in that** said lens unit holder (44) further includes an AF connector (70a) for electrically connecting an auto-focus mechanism incorporated in said lens unit (15) and an AF driver (84) for driving said auto-focus mechanism.

20. The apparatus for manufacturing a camera module as defined in claim 15, **characterized in that** said measurement chart (135) is divided into eight segments along an X axis direction, a Y axis direction and two diagonal directions form the center of a rectangular chart surface, and two segments of each quadrant (136-139) have mutually orthogonal parallel lines.

**Patentansprüche**

1. Verfahren zum Einstellen der Position eines Bildsensors, **dadurch gekennzeichnet, dass** es umfasst:

(A) einen In-Schärfe-Koordinatenwert-Bezugsschritt, der folgende Schritte umfasst:

Plazieren einer Aufnahmelinse (6) und eines Bildsensors (12) zum Erfassen eines Diagrammbildes, das durch die Aufnahmelinse ausgebildet wird, auf einer Z-Achse, die orthogonal zu einem Messdiagramm (52, 130, 135) ist;

Erfassen des Diagrammbildes, während die Aufnahmelinse (6) oder der Bildsensor (12) nacheinander zu einer Vielzahl diskreter Messpositionen bewegt werden, die zuvor auf der Z-Achse eingerichtet wurden;

Berechnen eines Schärfebewertungswertes, der einen Schärfegrad an jeder der Messpositionen in zahlreichen Abbildungspositionen (89a-89e) kennzeichnet, auf der Basis von Bildsignalen, die man in wenigstens fünf der Abbildungspositionen (89a-89e) auf einer Abbildungsfläche (12a) des Bildsensors (12) erhält; und

Beziehen einer Z-Achsen-Koordinate der Messposition, die einen vorbestimmten Schärfebewertungswert liefert, als In-Schärfe-Koordinatenwert für jede der Abbildungspositionen (89a-89e);

(B) einen Bildebenen-Berechnungsschritt, der folgende Schritte umfasst:

Transformieren von wenigstens fünf Bewertungspunkten in einem dreidimensionalen Koordinatensystem, das aus einer XY-Koordinatenebene besteht, die orthogonal zu der Z-Achse ist, wobei jeder der Bewertungspunkte ausgedrückt ist durch eine Kombination aus XY-Koordinatenwerten der Abbildungspositionen (89a-89e), die man erhält, wenn die Abbildungsfläche (12a) mit der XY-Koordinatenebene überlappt, und den In-Schärfe-Koordinatenwerten auf der Z-Achse der Abbildungspositionen (89a-89e); und

Berechnen einer approximativen Abbildungsebene, die als einzelne Ebene in dem dreidimensionalen Koordinatensystem definiert ist, auf der Basis der relativen Position der Bewertungspunkte;

(C) einen Einstellwert-Berechnungsschritt zum Berechnen eines Abbildungsebenen-Koordinatenwertes, der einen Schnittpunkt zwischen der approximativen Abbildungsebene und der Z-Achse repräsentiert, und Drehwinkeln der approximativen Abbildungsebene um eine X-Achse und eine Y-Achse in Bezug auf die XY-Koordinatenebene; und

(D) einen Einstellschritt zum Einstellen der Position auf der Z-Achse und einer Neigung um die X- und Y-Achse des Bildsensors (12) auf der Basis des Abbildungsebenen-Koordinatenwertes und der Drehwinkel, so dass die Abbildungsoberfläche (12a) mit der approximativen Abbildungsebene überlappt.

2. Verfahren zum Einstellen der Position eines Bildsensors nach Anspruch 1, **dadurch gekennzeichnet, dass** man bei dem In-Schärfe-Koordinatenwert-Bezugsschritt eine Z-Achsen-Koordinate der Messposition, die den höchsten Schärfebewertungswert liefert, als In-Schärfe-Koordinatenwert für jede der Abbildungspositionen (89a-89e) erhält.

3. Verfahren zum Einstellen der Position eines Bildsensors nach Anspruch 1, **dadurch gekennzeichnet, dass** der In-Schärfe-Koordinatenwert-Bezugsschritt weiterhin folgende Schritte umfasst:

Vergleichen der Schärfebewertungswerte der aufeinander folgenden Messpositionen in jeder der Abbildungspositionen (89a-89e); und

Stoppen des Bewegens der Aufnahmelinse (6) oder des Bildsensors (12) zur nächsten Messposition, wenn der Bewertungswert kontinuierlich für eine vorbestimmte Anzahl aufeinander folgender Zeitpunkte abnimmt, und Beziehen einer Z-Achsen-Koordinate der Messposition bevor der Bewertungswert abnimmt, als den In-Schärfe-Koordinatenwert.

4. Verfahren zum Einstellen der Position eines Bildsensors nach Anspruch 1, **dadurch gekennzeichnet, dass** der In-Schärfe-Koordinatenwert-Bezugsschritt weiterhin folgende Schritte umfasst:

Erzeugen einer approximativen Kurve aus einer Vielzahl von Bewertungspunkten, die durch eine Kombination aus Z-Achsen-Koordinatenwerten der Messpositionen und den Schärfebewertungswerten an den Messpositionen ausgedrückt sind, für jede der Abbildungspositionen (89a-89e); und

Beziehen einer Z-Achsenposition, die dem höchsten Schärfebewertungswert entspricht, der aus der approximativen Kurve abgeleitet wird, als den In-Schärfe-Koordinatenwert.

5. Verfahren zum Einstellen der Position eines Bildsensors nach Anspruch 1, **dadurch gekennzeichnet, dass** der In-Schärfe-Koordinatenwert-Bezugsschritt weiterhin folgende Schritte umfasst:

Berechnen einer Differenz zwischen jedem Schärfebewertungswert an jeder der Messpositionen und einem vorbestimmten gekennzeichneten Wert für jede der Abbildungspositionen (89a-89e); und

Beziehen einer Z-Achsen-Position der Messposition, die die kleinste Differenz hat.

6. Verfahren zum Einstellen der Position eines Bildsensors nach Anspruch 1, **dadurch gekennzeichnet, dass** die Schärfebewertungswerte Kontrasttransfer-Funktionswerte sind.

7. Verfahren zum Einstellen der Position eines Bildsensors nach Anspruch 6, **dadurch gekennzeichnet, dass** der In-Schärfe-Koordinatenwert-Bezugsschritt weiterhin folgende Schritte umfasst:

> Berechnen des Kontrasttransfer-Funktionswertes in einer ersten Richtung und einer zweiten Richtung, die orthogonal zu der ersten Richtung ist, auf der XY-Koordinatenebene für jede Messposition in den Abbildungspositionen (89a-89e); und
> Beziehen erster und zweiter In-Schärfe-Koordinaten separat jeweils in der ersten und in der zweiten Richtung für jede der Abbildungspositionen (89a-89e),
> wobei der Abbildungsebenen-Berechnungsschritt folgende Schritte umfasst:
>
>> Beziehen von wenigstens zehn Bewertungspunkten (Hb1-Hb5, Vb1-Vb5) aus den ersten und zweiten In-Schärfe-Koordinaten für jede der Abbildungspositionen (89a-89e); und
>> Berechnen der approximativen Abbildungsebene auf der Basis der relativen Position der Bewertungspunkte (Hb1-Hb5, Vb1-Vb5).

8. Verfahren zum Einstellen der Position eines Bildsensors nach Anspruch 7, **dadurch gekennzeichnet, dass** die erste Richtung eine horizontale Richtung ist und die zweite Richtung eine vertikale Richtung ist.

9. Verfahren zum Einstellen der Position eines Bildsensors nach Anspruch 7, **dadurch gekennzeichnet, dass** die erste Richtung eine radiale Richtung der Aufnahmelinse (6) ist und die zweite Richtung eine orthogonale Richtung zu der radialen Richtung ist.

10. Verfahren zum Einstellen der Position eines Bildsensors nach Anspruch 1, **dadurch gekennzeichnet, dass** die fünf Abbildungspositionen (89a-89e) das Zentrum (12b) und eine Fläche in einem anderen Quadranten der Abbildungsfläche (12a) sind.

11. Verfahren zum Einstellen der Position eines Bildsensors nach Anspruch 1, **dadurch gekennzeichnet, dass** bei dem In-Schärfe-Koordinatenwert-Bezugsschritt ein identisches Diagrammmuster auf jeder der Abbildungspositionen (89a-89e) ausgebildet wird.

12. Verfahren zum Einstellen der Position eines Bildsensors nach Anspruch 1, **dadurch gekennzeichnet, dass** es weiterhin umfasst: einen Prüfschritt, um den In-Schärfe-Koordinatenwert-Bezugsschritt nach dem Einstellschritt noch einmal zu durchlaufen, um den In-Schärfe-Koordinatenwert jeder der Abbildungspositionen (89a-89e) zu überprüfen.

13. Verfahren zum Einstellen der Position eines Bildsensors nach Anspruch 1, **dadurch gekennzeichnet, dass** der In-Schärfe-Koordinatenwert-Bezugsschritt, der Abbildungsebenen-Berechnungsschritt, der Einstellwert-Berechnungsschritt und der Einstellschritt mehrmals wiederholt werden, um so die Abbildungsoberfläche (12a) mit der approximativen Abbildungsebene zu überlappen.

14. Verfahren zum Herstellen eines Kameramoduls, **dadurch gekennzeichnet, dass** es folgende Schritte umfasst:

> Ausführen der Bildsensor-Einstellposition des Verfahrens nach Anspruch 1, um so die Position einer Sensoreinheit (16), die einen Bildsensor (12) hat, in Bezug auf eine Linseneinheit (15) einzustellen, die eine Aufnahmelinse (6) hat; und
> Fixieren der Sensoreinheit (16) an der Linseneinheit (15).

15. Vorrichtung zum Herstellen eines Kameramoduls, **dadurch gekennzeichnet, dass** sie umfasst:

> ein Messdiagramm (52, 130, 135), das ein Diagrammmuster hat;
> einen Linseneinheitshalter (44) zum Halten einer Linseneinheit (15), die eine Aufnahmelinse (6) hat, und zum Plazieren dieser Linseneinheit (15) auf einer Z-Achse, die orthogonal zu dem Messdiagramm (52, 130, 135) ist;
> einen Sensoreinheitshalter (45) zum Halten einer Sensoreinheit (16), die einen Bildsensor (12) hat, um so die Sensoreinheit (16) auf der Z-Achse zu plazieren, und zum Ändern der Position der Sensoreinheit (16) auf der Z-Achse und der Neigung der Sensoreinheit (16) um die X- und Y-Achsen, die orthogonal zu der Z-Achse sind;
> eine Messpositions-Wechseleinrichtung zum Bewegen des Linseneinheitshalters (44) oder des Sensoreinheitshalters (45) derart, dass die Aufnahmelinse (6) oder der Bildsensor (12) nacheinander in einer Vielzahl von diskreten Messpositionen angeordnet wird, die zuvor auf der Z-Achse eingerichtet wurden;

eine Sensorsteuereinheit (48) zum Steuern des Bildsensors (12), um ein Diagrammbild, das von der Aufnahmelinse (6) ausgebildet wird, an jeder der Messpositionen (89a-89e) zu erfassen;

eine In-Schärfe-Koordinaten-Bezugsvorrichtung (87) zum Berechnen eines Schärfebewertungswertes, der einen Schärfegrad an jeder der Messpositionen in zahlreichen Abbildungspositionen (89a-89e) kennzeichnet, auf der Basis von Bildsignalen, die man in wenigstens fünf der Abbildungspositionen (89a-89e) auf einer Abbildungsoberfläche (12a) des Bildsensors (12) erhält, und zum Beziehen einer Z-Achsen-Koordinate der Messposition, die einen vorbestimmten Schärfebewertungswert liefert, als In-Schärfe-Koordinatenwert für jede der Abbildungspositionen (89a-89e);

eine Bildebenen-Berechnungsvorrichtung (92) zum Transformieren von wenigstens fünf Bewertungspunkten in einem dreidimensionalen Koordinatensystem, das aus einer XY-Koordinatenebene besteht, die orthogonal zu der Z-Achse ist, wobei jeder der Bewertungspunkte ausgedrückt ist durch eine Kombination aus XY-Koordinatenwerten der Abbildungspositionen (89a-89e), die man erhält, wenn die Abbildungsfläche (12a) mit der XY-Koordinatenebene überlappt, und den In-Schärfe-Koordinatenwerten auf der Z-Achse der Abbildungspositionen (89a-89e), und zum Berechnen einer approximativen Abbildungsebene, die als einzelne Ebene in dem dreidimensionalen Koordinatsystem definiert ist, auf der Basis der relativen Position der Bewertungspunkte;

eine Einstellwert-Berechnungsvorrichtung (95) zum Berechnen eines Abbildungsebenen-Koordinatenwertes, der einen Schnittpunkt zwischen der approximativen Abbildungsebene und der Z-Achse repräsentiert, und Drehwinkeln der approximativen Abbildungsebene um eine X-Achse und eine Y-Achse in Bezug auf die XY-Koordinatenebene;

und eine Einstelleinrichtung (48) zum Ansteuern des Sensoreinheitshalters (45) auf der Basis eines Abbildungsebenen-Koordinatenwertes und der Drehwinkel um die X- und Y-Achse, um so die Position des Bildsensors (12) auf der Z-Achse und die Neigung des Bildsensors (12) um die X- und Y-Achse einzustellen, bis die Abbildungsoberfläche (12a) die approximative Abbildungsebene überlappt.

**16.** Vorrichtung zum Herstellen eines Kameramoduls nach Anspruch 15, **dadurch gekennzeichnet, dass** sie weiterhin umfasst:

eine Fixiervorrichtung (46) zum Fixieren der Linseneinheit und der Sensoreinheit nach der Einstellung des Bildsensors (12).

**17.** Vorrichtung zum Herstellen eines Kameramoduls nach Anspruch 15, **dadurch gekennzeichnet, dass** der Sensoreinheitshalter (45) umfasst:

einen Haltemechanismus (72) zum Halten der Sensoreinheit (16);
ein Zweiachsen-Drehgestell (74) zum Neigen des Haltemechanismus (72) um die X-Achse und die Y-Achse; und
ein Verschiebegestell (76) zum Bewegen des Zweiachsen-Drehgestells (74) entlang der Z-Achse.

**18.** Vorrichtung zum Herstellen eines Kameramoduls nach Anspruch 15, **dadurch gekennzeichnet, dass** der Sensoreinheitshalter (45) weiterhin einen Sensorverbinder (79a) zum elektrischen Verbinden des Bildsensors (12) und der Sensorsteuereinheit (48) umfasst.

**19.** Vorrichtung zum Herstellen eines Kameramoduls nach Anspruch 15, **dadurch gekennzeichnet, dass** der Linseneinheitshalter (44) weiterhin einen AF-Verbinder (70a) zum elektrischen Verbinden eines Autofokus-Mechanismus', der in der Linseneinheit (15) enthalten ist, und einer AF-Ansteuereinrichtung (84) zum Ansteuern des Autofokus-Mechanismus' umfasst.

**20.** Vorrichtung zum Herstellen eines Kameramoduls nach Anspruch 15, **dadurch gekennzeichnet, dass** das Messdiagramm (135) in acht Segmente entlang einer X-Achsenrichtung, einer Y-Achsenrichtung und zweier diagonaler Richtungen von dem Zentrum einer rechteckigen Diagrammoberfläche unterteilt ist und zwei Segmente jedes Quadranten (136-139) wechselseitig orthogonale parallele Linien haben.

**Revendications**

**1.** Procédé de réglage de position d'un capteur d'image, **caractérisé en ce qu'**il comprend :

(A) une étape d'obtention d'une valeur de coordonnée focalisée, comprenant les étapes suivantes :

placement d'une lentille de prise de vue (6) et d'un capteur d'image (12) pour capturer une image de diagramme formée par ladite lentille de prise de vue sur un axe Z orthogonal à un diagramme de mesure (52, 130, 135) ;

capture de ladite image de diagramme tout en déplaçant séquentiellement ladite lentille de prise de vue (6) ou ledit capteur d'image (12) dans une pluralité de positions de mesure discrètes établies préalablement sur ledit axe Z ;

calcul d'une valeur d'évaluation de mise au point indiquant un degré de mise au point à chacune desdites positions de mesure dans une pluralité de positions de prise de vue (89a-89e) sur base de signaux d'image obtenus dans au moins cinq desdites positions de prise de vue (89a-89e) sur une surface de prise d'image (12a) dudit capteur d'image (12) ; et

obtention d'une coordonnée d'axe Z de la position de mesure fournissant une valeur d'évaluation de mise au point prédéterminée comme valeur de coordonnée focalisée pour chacune desdites positions de prise de vue (89a-89e) ;

(B) une étape de calcul de plan de prise d'image comprenant les étapes suivantes :

transformation d'au moins cinq points d'évaluation dans un système de coordonnées tridimensionnel composé d'un plan de coordonnées XY orthogonal audit axe Z, chacun desdits points d'évaluation étant exprimé par une combinaison de valeurs de coordonnées XY desdites positions de prise de vue (89a-89e) obtenues lorsque ladite surface de prise d'image (12a) chevauche ledit plan de coordonnées XY et desdites valeurs de coordonnées focalisées sur ledit axe Z desdites positions de prise de vue (89a-89e) ; et

calcul d'un plan de prise d'image approximatif défini comme un plan unique dans ledit système de coordonnées tridimensionnel sur base de la position relative desdits points d'évaluation ;

(C) une étape de calcul de valeur de réglage pour calculer une valeur de coordonnée de plan de prise d'image représentant un point d'intersection entre ledit plan de prise d'image approximatif et ledit axe Z, et des angles de rotation dudit plan de prise d'image approximatif autour d'un axe X et d'un axe Y par rapport audit plan de coordonnées XY ; et

(D) une étape de réglage pour régler une position sur ledit axe Z et pivoter autour desdits axes X et Y dudit capteur d'image (12) sur base de ladite valeur de coordonnée de plan de prise d'image et desdits angles de rotation, de telle sorte que ladite surface de prise d'image (12a) chevauche ledit plan de prise d'image approximatif.

2. Procédé de réglage de position d'un capteur d'image selon la revendication 1, **caractérisé en ce que**, dans ladite étape d'obtention d'une valeur de coordonnée focalisée, une coordonnée d'axe Z de la position de mesure fournissant la valeur d'évaluation de mise au point la plus élevée est obtenue comme ladite valeur de coordonnée focalisée pour chacune desdites positions de prise de vue (89a-89e).

3. Procédé de réglage de position d'un capteur d'image selon la revendication 1, **caractérisé en ce que** ladite étape d'obtention d'une valeur de coordonnée focalisée comprend en outre les étapes suivantes :

comparaison desdites valeurs d'évaluation de mise au point des positions de mesure consécutives dans chacune desdites positions de prise de vue (89a-89e) ; et

arrêt du déplacement de ladite lentille de prise de vue (6) ou dudit capteur d'image (12) vers la position de mesure suivante lorsque ladite valeur d'évaluation diminue continuellement au cours d'un nombre de fois consécutives prédéterminé, et obtention d'une coordonnée d'axe Z de la position de mesure avant que ladite valeur d'évaluation ne diminue comme ladite valeur de coordonnée focalisée.

4. Procédé de réglage de position d'un capteur d'image selon la revendication 1, **caractérisé en ce que** ladite étape d'obtention d'une valeur de coordonnée focalisée comprend en outre les étapes suivantes :

génération d'une courbe approximative à partir d'une pluralité de points d'évaluation exprimée par une combinaison de valeurs de coordonnée d'axe Z desdites positions de mesure et desdites valeurs d'évaluation de mise au point auxdites positions de mesure pour chacune desdites positions de prise de vue (89a-89e) ; et

obtention d'une position d'axe Z correspondant à la valeur d'évaluation de mise au point la plus élevée dérivée de ladite courbe approximative comme ladite valeur de coordonnée focalisée.

5. Procédé de réglage de position d'un capteur d'image selon la revendication 1, **caractérisé en ce que** ladite étape d'obtention d'une valeur de coordonnée focalisée comprend en outre les étapes suivantes :

calcul d'une différence entre chaque valeur d'évaluation de mise au point à chacune desdites positions de mesure et une valeur désignée prédéterminée pour chacune desdites positions de prise de vue (89a-89e) ; et obtention d'une position d'axe Z de la position de mesure ayant la plus petite desdites différences.

6. Procédé de réglage de position d'un capteur d'image selon la revendication 1, **caractérisé en ce que** lesdites valeurs d'évaluation de mise au point sont des valeurs de fonction de transfert de contraste.

7. Procédé de réglage de position d'un capteur d'image selon la revendication 6, **caractérisé en ce que** ladite étape d'obtention d'une valeur de coordonnée focalisée comprend en outre les étapes suivantes :

calcul de ladite valeur de fonction de transfert de contraste dans une première direction et une deuxième direction orthogonale à ladite première direction dans ledit plan de coordonnées XY pour chacune desdites positions de mesure dans lesdites positions de prise de vue (89a-89e) ; et obtention de première et deuxième coordonnées focalisées séparément dans chacune desdites première et deuxième directions pour chacune desdites positions de prise de vue (89a-89e), et dans lequel ladite étape de calcul de plan de prise d'image comprend les étapes suivantes :

obtention d'au moins dix points d'évaluation (Hb1-Hb5, Vb1-Vb5) à partir desdites première et deuxième coordonnées focalisées pour chacune desdites positions de prise de vue (89a-89e) ; et calcul dudit plan de prise d'image approximatif sur base de la position relative desdits points d'évaluation (Hb1-Hb5, Vb1-Vb5).

8. Procédé de réglage de position d'un capteur d'image selon la revendication 7, **caractérisé en ce que** ladite première direction est une direction horizontale, et ladite deuxième direction est une direction verticale.

9. Procédé de réglage de position d'un capteur d'image selon la revendication 7, **caractérisé en ce que** ladite première direction est une direction radiale de ladite lentille de prise de vue (6) et ladite deuxième direction est une direction orthogonale à ladite direction radiale.

10. Procédé de réglage de position d'un capteur d'image selon la revendication 1, **caractérisé en ce que** lesdites cinq positions de prise de vue (89a-89e) sont le centre (12b) et une surface dans chaque quadrant différent de ladite surface de prise d'image (12a).

11. Procédé de réglage de position d'un capteur d'image selon la revendication 1, **caractérisé en ce que**, dans ladite étape d'obtention de coordonnée focalisée, un motif de diagramme identique est formé sur chacune desdites positions de prise de vue (89a-89e).

12. Procédé de réglage de position d'un capteur d'image selon la revendication 1, **caractérisé en ce qu'**il comprend en outre : une étape de vérification pour mettre de nouveau en oeuvre ladite étape d'obtention de coordonnée focalisée après ladite étape de réglage, de manière à vérifier ladite valeur de coordonnée focalisée de chacune desdites positions de prise de vue (89a-89e).

13. Procédé de réglage de position d'un capteur d'image selon la revendication 1, **caractérisé en ce que**, ladite étape d'obtention d'une valeur de coordonnée focalisée, ladite étape de calcul de plan de prise d'image, ladite étape de calcul de valeur de réglage et ladite étape de réglage sont répétées plusieurs fois de manière à chevaucher ladite surface de prise d'image (12a) avec ledit plan de prise d'image approximatif.

14. Procédé de fabrication d'un module de caméra, **caractérisé en ce qu'**il comprend les étapes suivantes :

mise en oeuvre du procédé de réglage de position d'un capteur d'image selon la revendication 1, de manière à régler la position d'une unité de capteur (16) ayant un capteur d'image (12) par rapport à une unité de lentille (15) comportant une lentille de prise de vue (6) ; et fixation de ladite unité de capteur (16) à ladite unité de lentille (15).

15. Appareil de fabrication d'un module de caméra, **caractérisé en ce qu'**il comprend :

un diagramme de mesure (52, 130, 135) présentant un motif de diagramme ;

un support d'unité de lentille (44) pour supporter une unité de lentille (15) comportant une lentille de prise de vue (6) et pour placer ladite unité de lentille (15) sur un axe Z orthogonal audit diagramme de mesure (52, 130, 135) ;

un support d'unité de capteur (45) pour supporter une unité de capteur (16) comportant un capteur d'image (12) de manière à placer ladite unité de capteur (16) sur ledit axe Z, et pour changer la position de ladite unité de capteur (16) sur ledit axe Z et l'inclinaison de ladite unité de capteur (16) autour d'axes X et Y orthogonaux audit axe Z ;

un changeur de position de mesure pour déplacer ledit support d'unité de lentille (44) ou ledit support d'unité de capteur (45) de telle sorte que ladite lentille de prise de vue (6) ou ledit capteur d'image (12) est placé séquentiellement dans une pluralité de positions de mesure discrètes préalablement établies sur ledit axe Z ;

un contrôleur de capteur (48) pour contrôler ledit capteur d'image (12) afin de capturer une image de diagramme formée par ladite lentille de prise de vue (6) à chacune desdites positions de mesure (89a-89e) ;

un dispositif d'obtention d'une coordonnée focalisée (87) pour calculer une valeur d'évaluation de mise au point indiquant un degré de mise au point à chacune desdites positions de mesure dans une pluralité de positions de prise de vue (89a-89e) sur base de signaux d'image obtenus dans au moins cinq desdites positions de prise de vue (89a-89e) sur une surface de prise d'image (12a) dudit capteur d'image (12), et pour obtenir une coordonnée d'axe Z de la position de mesure fournissant une valeur d'évaluation de mise au point prédéterminée comme valeur de coordonnée focalisée pour chacune desdites positions de prise de vue (89a-89e) ;

un dispositif de calcul de plan de prise d'image (92) pour transformer au moins cinq points d'évaluation dans un système de coordonnées tridimensionnel composé d'un plan de coordonnées XY orthogonal audit axe Z, chacun desdits points d'évaluation étant exprimé par une combinaison de valeurs de coordonnées XY desdites positions de prise de vue (89a-89e) obtenues lorsque ladite surface de prise d'image chevauche ledit plan de coordonnées XY et desdites valeurs de coordonnées focalisées sur ledit axe Z desdites positions de prise de vue (89a-89e), et pour calculer un plan de prise d'image approximatif défini comme un plan unique dans ledit système de coordonnées tridimensionnel sur base de la position relative desdits points d'évaluation ;

un dispositif de calcul de valeur de réglage (95) pour calculer une valeur de coordonnée de plan de prise d'image représentant un point d'intersection entre ledit plan de prise d'image approximatif et ledit axe Z, et des angles de rotation dudit plan de prise d'image approximatif autour d'un axe X et d'un axe Y par rapport audit plan de coordonnées XY ; et un dispositif de réglage (48) pour commander ledit support d'unité de capteur (45) sur base de ladite valeur de coordonnée de plan de prise d'image et desdits angles de rotation autour desdits axes X et Y de manière à régler la position dudit capteur d'image (12) sur ledit axe Z et l'inclinaison dudit capteur d'image (12) autour desdits axes X et Y jusqu'à ce que ladite surface de prise d'image (12a) chevauche ledit plan de prise d'image approximatif.

**16.** Appareil de fabrication d'un module de caméra selon la revendication 15, **caractérisé en ce qu'**il comprend en outre :

un dispositif de fixation (46) pour fixer ladite unité de lentille et ladite unité de capteur après le réglage dudit capteur d'image (12).

**17.** Appareil de fabrication d'un module de caméra selon la revendication 15, **caractérisé en ce que** ledit support d'unité de capteur (45) comprend :

un mécanisme de maintien (72) pour maintenir ladite unité de capteur (16) ;
un étage de rotation biaxial (74) pour incliner ledit mécanisme de maintien (72) autour desdits axes X et Y ; et
un étage de coulisseau (76) pour déplacer ledit étage de rotation biaxial (74) selon ledit axe Z.

**18.** Appareil de fabrication d'un module de caméra selon la revendication 15, **caractérisé en ce que** ledit support d'unité de capteur (45) comprend en outre un connecteur de capteur (79a) pour connecter électriquement ledit capteur d'image (12) et ledit contrôleur de capteur (48).

**19.** Appareil de fabrication d'un module de caméra selon la revendication 15, **caractérisé en ce que** ledit support d'unité de lentille (44) comprend en outre un connecteur de mise au point automatique (70a) pour connecter électriquement un mécanisme de mise au point automatique incorporé dans ladite unité de lentille (15) et un pilote de mise au point automatique (84) pour piloter ledit mécanisme de mise au point automatique.

**20.** Appareil de fabrication d'un module de caméra selon la revendication 15, **caractérisé en ce que** ledit diagramme de mesure (135) est divisé en huit segments selon une direction d'axe X, une direction d'axe Y et deux directions diagonales à partir du centre d'une surface de diagramme rectangulaire, et deux segments de chaque quadrant (136-139) présentent des lignes parallèles orthogonales entre elles.

# FIG. 1

# FIG. 2

# FIG. 3

# FIG. 4

FIG. 5

# FIG. 6

# FIG. 9

# FIG. 7

EP 2 081 391 B1

# FIG. 8

LIGHT SOURCE ~53

FIRST SLIDE STAGE ~69

CHUCK HAND ~72

BIAXIAL ROTATION STAGE ~74

SECOND SLIDE STAGE ~76

INPUT DEVICE ~81

MONITOR ~82

CONTROLLER ~48

AF DRIVER ~84

IMAGE SENSOR DRIVER ~85

ADHESIVE SUPPLIER ~46

ULTRAVIOLET LAMP ~47

ADJUSTMENT VALUE CALCULATING CIRCUIT ~95

ELECTROMAGNET ~26

FIRST PROBE UNIT ~70

IMAGE SENSOR ~12

CONTROL SIGNAL    IMAGE SIGNAL

SECOND PROBE UNIT ~79

IMAGE SIGNAL

IN-FOCUS COORDINATE VALUE OBTAINING CIRCUIT ~87

HORIZONTAL AND VERTICAL IN-FOCUS COORDINATE VALUES

IMAGING PLANE CALCULATING CIRCUIT ~92

APPROXIMATE IMAGING PLANE

IMAGING PLANE COORDINATE VALUE
XY DIRECTION ROTATION ANGLES

EP 2 081 391 B1

# FIG. 10

START

HOLD LENS UNIT ～S1

HOLD SENSOR UNIT ～S2

OBTAIN HORIZONTAL AND VERTICAL
IN-FOCUS COORDINATE VALUES
FOR EACH IMAGING POSITION ～S3

Y ◁ FINISH CHECKING STEP? ▷～S4

N

MOVE SENSOR UNIT
TO IMAGING PANE
COORDINATE POINT ～S9

CALCULATE APPROXIMATE
IMAGING PLANE ～S5

SUPPLY ADHESIVE ～S10

CALCULATE IMAGING PLANE
COORDINATE VALUE AND
XY DIRECTION ROTATION ANGLES ～S6

IRRADIATE
ULTRAVIOLET LAMP ～S11

MOVE SENSOR UNIT BASED ON
IMAGING PLANE COORDINATE VALUE
AND XY DIRECTION ROTATION ANGLES ～S7

TAKE OUT
CAMERA MODULE ～S12

START CHECKING STEP ～S8

END

# FIG. 11

S2

S3

```
        MOVE SENSOR UNIT TO FIRST       S3-1
        MEASUREMENT POSITION
```

S3-5

```
                    CAPTURE IMAGE OF        S3-2
                    MEASUREMENT CHART
```

```
MOVE SENSOR UNIT TO
NEXT MEASUREMENT
POSITION
```

```
            CALCULATE H-CTF VALUE
            AND V-CTF VALUE FOR       S3-3
            EACH IMAGING POSITION
```

Y — NEXT MEASUREMENT POSITION? — S3-4

N

S3-6

```
OBTAIN HORIZONTAL AND VERTICAL
IN-FOCUS COORDINATE VALUES FROM
Z-AXIS COORDINATES OF MEASUREMENT
POSITIONS HAVING THE HIGHEST H-CTF AND
V-CTF VALUES IN EACH IMAGING POSITION
```

S4

# FIG. 12

Z0 Z1 Z2 Z3 Z4 Z5

H-CTF VALUES
BEFORE
ADJUSTMENT (%)

Ha1 : 1st IMAGING POSITION
Ha2 : 2nd IMAGING POSITION
Ha3 : 3rd IMAGING POSITION
Ha4 : 4th IMAGING POSITION
Ha5 : 5th IMAGING POSITION

-Z                    0                    +Z

MEASUREMENT POSITIONS

# FIG. 13

Z0 Z1 Z2 Z3 Z4

V-CTF VALUES
BEFORE
ADJUSTMENT (%)

Va1 : 1st IMAGING POSITION
Va2 : 2nd IMAGING POSITION
Va3 : 3rd IMAGING POSITION
Va4 : 4th IMAGING POSITION
Va5 : 5th IMAGING POSITION

-Z                    0                    +Z

MEASUREMENT POSITIONS

# FIG. 14

## EVALUATION POINTS BEFORE ADJUSTMENT

Hb1~Hb5:
HORIZONTAL EVALUATION POINTS
OF FIRST TO FIFTH IMAGING POSITIONS

Vb1~Vb5:
VERTICAL EVALUATION POINTS
OF FIRST TO FIFTH IMAGING POSITIONS

# FIG. 15

## EVALUATION POINTS BEFORE ADJUSTMENT

Hb1~Hb5:
HORIZONTAL EVALUATION POINTS
OF FIRST TO FIFTH IMAGING POSITIONS

Vb1~Vb5:
VERTICAL EVALUATION POINTS
OF FIRST TO FIFTH IMAGING POSITIONS

## FIG. 16

Hb1~Hb5:
  HORIZONTAL EVALUATION POINTS
  OF FIRST TO FIFTH IMAGING POSITIONS

Vb1~Vb5:
  VERTICAL EVALUATION POINTS
  OF FIRST TO FIFTH IMAGING POSITIONS

## FIG. 17

Hb1~Hb5:
  HORIZONTAL EVALUATION POINTS
  OF FIRST TO FIFTH IMAGING POSITIONS

Vb1~Vb5:
  VERTICAL EVALUATION POINTS
  OF FIRST TO FIFTH IMAGING POSITIONS

# FIG. 18

H-CTF VALUES
AFTER
ADJUSTMENT (%)

Z1 Z2 Z3 Z4

Ha1:1st IMAGING POSITION
Ha2:2nd IMAGING POSITION
Ha3:3rd IMAGING POSITION
Ha4:4th IMAGING POSITION
Ha5:5th IMAGING POSITION

MEASUREMENT POSITIONS

# FIG. 19

V-CTF VALUES
AFTER
ADJUSTMENT (%)

Z1 Z2 Z3

Va1:1st IMAGING POSITION
Va2:2nd IMAGING POSITION
Va3:3rd IMAGING POSITION
Va4:4th IMAGING POSITION
Va5:5th IMAGING POSITION

MEASUREMENT POSITIONS

# FIG. 20

### EVALUATION POINTS AFTER ADJUSTMENT

Hb1~Hb5:
HORIZONTAL EVALUATION POINTS
OF FIRST TO FIFTH IMAGING POSITIONS

Vb1~Vb5:
VERTICAL EVALUATION POINTS
OF FIRST TO FIFTH IMAGING POSITIONS

# FIG. 21

### EVALUATION POINTS AFTER ADJUSTMENT

Hb1~Hb5:
HORIZONTAL EVALUATION POINTS
OF FIRST TO FIFTH IMAGING POSITIONS

Vb1~Vb5:
VERTICAL EVALUATION POINTS
OF FIRST TO FIFTH IMAGING POSITIONS

# FIG. 22

SECOND PROBE UNIT — 79

↓ IMAGE SIGNAL

100

IN-FOCUS COORDINATE VALUE
OBTAINING CIRCUIT

CTF VALUE
COMPARISON SECTION — 101

↓ HORIZONTAL AND VERTICAL
IN-FOCUS COORDINATE VALUES

IMAGING PLANE
CALCULATING CIRCUIT — 92

↓ APPROXIMATE IMAGING PLANE

ADJUSTMENT VALUE
CALCULATING CIRCUIT — 95

↓ IMAGING PLANE COORDINATE VALUE
XY DIRECTION ROTATION ANGLES

CONTROLLER — 48

# FIG. 23

S2

S3

MOVE SENSOR UNIT TO FIRST MEASUREMENT POSITION — S3-1

CAPTURE IMAGE OF MEASUREMENT CHART — S3-2

S3-5

MOVE SENSOR UNIT TO NEXT MEASUREMENT POSITION

CALCULATE H-CTF VALUE AND V-CTF VALUE FOR EACH IMAGING POSITION — S3-3

Y ← NEXT MEASUREMENT POSITION? — S20-1

N

COMPARE H-CTF AND V-CTF VALUES OF PRESENT AND PREVIOUS MEASUREMENT POSITIONS — S20-2

H-CTF AND V-CTF VALUES DECLINE TWO CENSECUTIVE TIMES? — S20-3  Y

S20-4

N

OBTAIN HORIZONTAL AND VERTICAL IN-FOCUS COORDINATE VALUES FOR EACH IMAGING POSITION FROM MEASUREMENT POSITION BEFORE CTF VALUES DECLINE

Y ← NEXT MEASUREMENT POSITION? — S3-4

N

S3-6 — OBTAIN HORIZONTAL AND VERTICAL IN-FOCUS COORDINATE VALUES FROM Z-AXIS COORDINATES OF MEASUREMENT POSITIONS HAVING THE HIGHEST H-CTF AND V-CTF VALUES IN EACH IMAGING POSITION

S4

# FIG. 24

103   104   105

H-CTF VALUES
BEFORE
ADJUSTMENT (%)

-Z                    -Z2    0                          +Z

MEASUREMENT POSITIONS

# FIG. 25

SECOND PROBE UNIT — 79

↓ IMAGE SIGNAL

110

IN-FOCUS COORDINATE VALUE
OBTAINING CIRCUIT

APPROXIMATE CURVE
GENERATING SECTION — 112

↓ HORIZONTAL AND VERTICAL
IN-FOCUS COORDINATE VALUES

IMAGING PLANE
CALCULATING CIRCUIT — 92

↓ APPROXIMATE IMAGING PLANE

ADJUSTMENT VALUE
CALCULATING CIRCUIT — 95

↓ IMAGING PLANE COORDINATE VALUE
XY DIRECTION ROTATION ANGLES

CONTROLLER — 48

# FIG. 26

S2

S3

MOVE SENSOR UNIT TO FIRST MEASUREMENT POSITION — S3-1

CAPTURE IMAGE OF MEASUREMENT CHART — S3-2

S3-5

MOVE SENSOR UNIT TO NEXT MEASUREMENT POSITION

CALCULATE H-CTF VALUE AND V-CTF VALUE FOR EACH IMAGING POSITION — S3-3

Y ⟨ NEXT MEASUREMENT POSITION? ⟩ — S3-4

N

GENERATE APPROXIMATE CURVE BASED ON EACH H-CTF AND V-CTF VLUES — S30-1

OBTAIN PEAK POINT OF EACH APPROXIMATE CURVE — S30-2

S30-3

OBTAIN HORIZONTAL AND VERTICAL IN-FOCUS COORDINATE VALUES FOR EACH IMAGING POSITION FROM Z-AXIS COORDINATE CORRESPONDING TO PEAK POINT OF EACH APPROXIMATE CURVE

S4

# FIG. 27A

H-CTF VALUES
BEFORE
ADJUSTMENT (%)

-Z · · · · · · · · · · 0 · · · · · · · · · · +Z

MEASUREMENT POSITIONS

# FIG. 27B

Zp

H-CTF VALUES
BEFORE
ADJUSTMENT (%)

MP

AC

-Z · · · · · · · · · · 0 · · · · · · · · · · +Z

MEASUREMENT POSITIONS

# FIG. 28

120

```
         SECOND PROBE UNIT ─── 79
                    │
               IMAGE SIGNAL
                    ↓
   IN-FOCUS COORDINATE VALUE
       OBTAINING CIRCUIT
   ┌──────────────────────────┐
   │           ROM            │─── 121
   │  ┌─────────────────────┐ │
   │  │  DESIGNATED VALUE    │ │─── 122
   │  └─────────────────────┘ │
   └──────────────────────────┘
                    │
       HORIZONTAL AND VERTICAL
       IN-FOCUS COORDINATE VALUES
                    ↓
         IMAGING PLANE
     CALCULATING CIRCUIT ─── 92
                    │
        APPROXIMATE IMAGING PLANE
                    ↓
        ADJUSTMENT VALUE
     CALCULATING CIRCUIT ─── 95
                    │
    IMAGING PLANE COORDINATE VALUE
    XY DIRECTION ROTATION ANGLES
                    ↓
           CONTROLLER ─── 48
```

# FIG. 29

S2

S3

MOVE SENSOR UNIT TO FIRST MEASUREMENT POSITION — S3-1

CAPTURE IMAGE OF MEASUREMENT CHART — S3-2

S3-5

MOVE SENSOR UNIT TO NEXT MEASUREMENT POSITION

CALCULATE H-CTF VALUE AND V-CTF VALUE FOR EACH IMAGING POSITION — S3-3

Y — NEXT MEASUREMENT POSITION? — S3-4

N

RETRIEVE DESIGNATED VALUE — S40-1

CALCULATE DIFFERENCE OF H-CTF AND V-CTF VALUES FROM DESIGNATED VALUE — S40-2

S40-3

OBTAIN HORIZONTAL AND VERTICAL IN-FOCUS COORDINATE VALUES FOR EACH IMAGING POSITION FROM Z-AXIS COORDINATE OF MEASUREMENT POSITION HAVING THE SMALLEST DIFFERENCE

S4

# FIG. 30

MEASUREMENT POSITIONS

# FIG. 31

# FIG. 32

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005198103 A

- JP 2003043328 A